# EUROPEAN PATENT SPECIFICATION

(11) **EP 3 358 272 B1**
(45) Date of publication and mention of the grant of the patent: **17.06.2020**
(21) Application number: 16851178.0
(22) Date of filing: 14.09.2016
(51) Int. Cl.: F24H 9/02, F24D 3/18, F25B 1/00

(54) **WATER HEAT EXCHANGER ACCOMMODATION UNIT**
AUFNAHMEEINHEIT FÜR WASSERWÄRMETAUSCHER
ENSEMBLE DE LOGEMENT D'ÉCHANGEUR DE CHALEUR À EAU

(30) Priority: 30.09.2015 JP 2015193542
(43) Date of publication of application: 08.08.2018
(73) Proprietor: Daikin Industries, Ltd., Osaka-shi, Osaka 530-8323 (JP)
(72) Inventor: YOSHIKAWA, Shinji, Osaka 530-8323 (JP); ANDOU, Takeharu, Osaka 530-8323 (JP)
(74) Representative: Hoffmann Eitle
(86) International application number: PCT/JP2016/077172
(87) International publication number: WO 2017/057004

(56) References cited:
- EP-A1- 2 110 614
- EP-A2- 0 726 430
- WO-A1-2015/029094
- DE-A1-102009 029 392
- JP-A- 2001 099 530
- JP-A- 2004 286 315
- JP-A- 2008 292 066
- JP-A- 2013 044 515
- JP-A- 2013 047 591
- JP-A- 2014 006 016
- JP-A- 2015 161 424

## Description

### TECHNICAL FIELD

The present invention relates to a water heat exchanger accommodation unit, and more particularly to a water heat exchanger accommodation unit accommodating a water heat exchanger using a flammable refrigerant.

### BACKGROUND ART

Conventionally, as the water heat exchanger accommodation unit, there has been a cold/hot water supply unit that accommodates a water heat exchanger for performing heat exchange between water and refrigerants (see, for example, JP 2014-163536 A).

EP 2 110 614 A1 relates to a system that has a coolant circuit comprising components such as a compressor for compressing a coolant, and an expansion device i.e. throttle, for expanding the coolant. A housing has an inner area and an outer area sealed against each other via a sealing device in form of a separation wall. The components of the circuit are arranged such that all joint points that exist between pipe elements or between the pipe elements and other components of the coolant circuit are not arranged in the inner area, where a part of the joint points is formed by a soldering connection. The pipe elements are provided for cooling a coolant.

DE 10 2009 029392 A1 relates to an explosion-proof refrigeration system with flammable refrigerant.

### SUMMARY OF INVENTION

### TECHNICAL PROBLEMS

In the case where a flammable refrigerant is used in a water heat exchanger accommodation unit under the circumstances where the water heat exchanger accommodation unit is installed indoors, when the flammable refrigerant leaks from a connection portion between the water heat exchanger and a refrigerant pipe, the flammable refrigerant may stay in the room and a gas concentration may increase. The narrower a indoor space is, the denser the gas concentration of the flammable refrigerant becomes, which increases the risk of ignition and the like.

Thus, an object of the present invention is to provide a water heat exchanger accommodation unit capable of preventing refrigerant leakage into a room when a flammable refrigerant leaks.

### SOLUTIONS TO PROBLEMS

In order to solve the problem, a water heat exchanger accommodation unit comprises:
a water heat exchanger through which a flammable refrigerant flows;
a casing accommodating the water heat exchanger; and
an inner cover member disposed in the casing and configured to cover at least a refrigerant pipe connection portion of a refrigerant circuit and to guide a leaking flammable refrigerant to an outside of the casing, wherein the inner cover member includes a guide portion engaged with a connection port provided in the casing and configured to guide the leaking flammable refrigerant to the connection port.

According to the above configuration, the inner cover member disposed in the casing accommodating the water heat exchanger covers at least the refrigerant pipe connection portion of the refrigerant circuit and guides the leaking flammable refrigerant to the outside of the casing. With this, when the flammable refrigerant leaks rapidly into the casing, since most of the flammable refrigerant immediately after leaking from at least the refrigerant pipe connection portion of the refrigerant circuit covered with the inner cover member remains as liquid, the flammable refrigerant is guided by the inner cover member to be discharged. Therefore, even in an environment where the water heat exchanger accommodation unit is installed in a room, it is possible to perform processing so that the flammable refrigerant guided by the inner cover member does not leak into the room from inside the casing. Thus, leakage of the refrigerant into the room can be prevented when the flammable refrigerant leaks, and it is possible to prevent the flammable refrigerant from staying in the room, the gas concentration from increasing, and the risk of ignition and the like from increasing. Moreover, engaging the guide portion of the inner cover member with the connection port provided in the casing allows the inner cover member to be easily positioned and the leaking flammable refrigerant to be guided into the connection port.

In an embodiment, the inner cover member covers the water heat exchanger.

According to the above embodiment, covering the water heat exchanger with the inner cover member allows the flammable refrigerant to be discharged to the outside of the casing without diffusing into the casing even if the flammable refrigerant leaks from a refrigerant pipe connection portion of the water heat exchanger or the water heat exchanger itself.

In an embodiment, the inner cover member covers the whole refrigerant circuit in the casing .

According to the above embodiment, covering the whole refrigerant circuit in the casing with the inner cover member allows the flammable refrigerant to be reliably discharged to the outside of the casing without diffusing into the casing even if the flammable refrigerant leaks from any portion of the refrigerant circuit in the casing.

In an embodiment, the inner cover member is made of a heat insulating material.

According to the above embodiment, covering at least part of the water heat exchanger by an inner cover member made of a heat insulating material allows the inner cover member to also serve as a heat insulating material for insulating the water heat exchanger and to enhance the heat insulating effect.

In an embodiment, the water heat exchanger accommodation unit complises:
a control board disposed in the casing; and
a board cover member configured to cover the control board.

According to the above embodiment, covering the control board disposed in the casing with the board cover member allows the ignition point of the control board to be separated from the flammable refrigerant leaking into the casing, which improves safety.

### ADVANTAGEOUS EFFECTS OF INVENTION

As is clear from the above, according to the present invention, since the internal cover member disposed in the casing accommodating the water heat exchanger covers at least the refrigerant pipe connection portion of the refrigerant circuit and guides the leaking flammable refrigerant to the outside of the casing, processing can be performed so that the flammable refrigerant guided by the inner cover member does not leak from inside the casing into the room and thus it is achieved a water heat exchanger accommodating unit capable of preventing leakage of the refrigerant into the room when the flammable refrigerant leaks.

### BRIEF DESCRIPTION OF DRAWINGS

FIG. 1 is a schematic configuration diagram of a temperature control system according to a first embodiment of the present invention.
FIG. 2 is a front view of a cold/hot water supply unit attached to a wall surface of the temperature control system.
FIG. 3 is a diagram showing a configuration of the cold/hot water supply unit.
FIG. 4 is a front view of a cold/hot water supply unit of a temperature control system according to a second embodiment of the present invention.
FIG. 5 is a front view of a cold/hot water supply unit of a temperature control system according to a third embodiment of the present invention.
FIG. 6 is a diagram showing a configuration of a cold/hot water supply unit of a temperature control system according to a fourth embodiment of the present invention.
FIG. 7 is a diagram showing a configuration of a cold/hot water supply unit of a temperature control system according to a fifth embodiment of the present invention.
FIG. 8 is a cross-sectional view of a main part including a first cover member taken along line VII-VII in FIG. 7.
FIG. 9 is a diagram showing a configuration of a cold/hot water supply unit of a temperature control system according to a sixth embodiment of the present invention.
FIG. 10 is a cross-sectional view taken along line IX-IX in FIG. 9.
FIG. 11 is an enlarged cross-sectional view of a main part including a first cover member in FIG. 9.
FIG. 12 is an exploded perspective view of the cold/hot water supply unit.
FIG. 13 is a perspective view showing a state in which a back surface heat insulating member and first and second cover members are attached to a bottom frame of the cold/hot water supply unit.
FIG. 14 is a front view showing a state in which the back surface heat insulating member and the first and second cover members are attached to the bottom frame of the cold/hot water supply unit.
FIGS. 15(a) to 15(c) are perspective views of a second cover member.
FIG. 16 is a diagram showing a configuration of a cold/hot water supply unit of a temperature control system according to a seventh embodiment of the present invention.
FIG. 17 is a simplified configuration diagram showing a hot water supply apparatus including a hot water storage unit according to an eighth embodiment of the present invention.
FIG. 18 is a circuit diagram of the hot water supply apparatus.
FIG. 19 is a perspective view of a hot water storage unit of the hot water supply apparatus.
FIG. 20 is a perspective view showing a state in which pipes and the like of the hot water storage unit shown in FIG. 19 are removed.
FIG. 21 is a front view of a lower portion of the hot water storage unit.
FIG. 22 is a front view of a lower portion of a hot water storage unit according to a ninth embodiment of the present invention.
FIG. 23 is a front view of a lower portion of a hot water storage unit according to a tenth embodiment of the present invention.
FIG. 24 is a front view of a lower part of a hot water storage unit according to an eleventh embodiment of the present invention.

### DESCRIPTION OF EMBODIMENTS

In the following, a water heat exchanger accommodation unit of the present invention will be described in detail with reference to the illustrated embodiments.

### First Embodiment

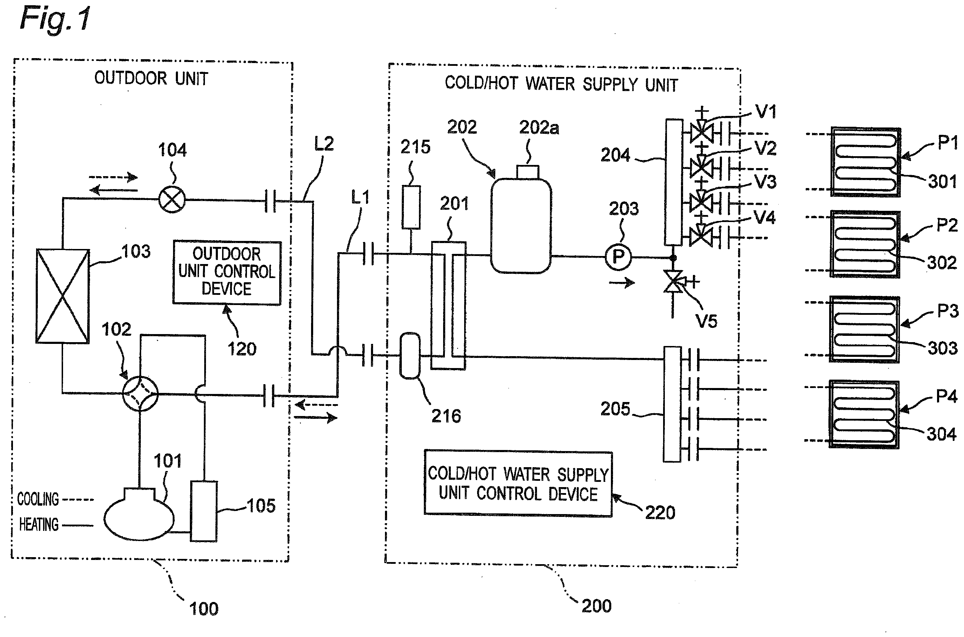

FIG. 1 is a schematic configuration diagram of a temperature control system according to a first embodiment of the present invention.

### <Overall Configuration of Temperature Control System>

As shown in FIG. 1, the temperature control system includes an outdoor unit 100, a cold/hot water supply unit 200 connected to the outdoor unit 100, and first to fourth floor cooling/heating panels P1 to P4 as an example of a heat exchange terminal connected to the cold/hot water supply unit 200. The cold/hot water supply unit 200 is an example of a water heat exchanger accommodation unit to be installed indoors.

### <Configuration of Outdoor Unit 100>

The outdoor unit 100 includes a compressor 101, a four-way switching valve 102, an outdoor heat exchanger 103, a motor-operated expansion valve 104, and an accumulator 105. One end of the outdoor heat exchanger 103 is connected to one end of the motor-operated expansion valve 104, and one end of a water heat exchanger 201 of the cold/hot water supply unit 200 is connected to the other end of the motor-operated expansion valve 104. In addition, a first port of the four-way switching valve 102 is connected to a discharge side of the compressor 101, and a second port of the four-way switching valve 102 is connected to one end of the outdoor heat exchanger 103. In addition, a third port of the four-way switching valve 102 is connected to a suction side of the compressor 101 through the accumulator 105, and a fourth port of the four-way switching valve 102 is connected to the other end of the water heat exchanger 201 on the cold/hot water supply unit 200.

During heating operation, the four-way switching valve 102 is switched to the switching position indicated by the solid line, and during cooling operation, the four-way switching valve 102 is switched to the switching position indicated by the dotted line.

The outdoor unit control device 120 controls the operation frequency of the compressor 101, and also controls the opening degree of the motor-operated expansion valve 104 so as to optimize the heat exchange efficiency of the water heat exchanger 201 and the outdoor heat exchanger 103.

In addition, annularly connecting the outdoor heat exchanger 103, the compressor 101, the water heat exchanger 201, and the motor-operated expansion valve 104 constitutes a refrigerant circuit. In this refrigerant circuit, as an example of a flammable refrigerant, a single refrigerant of R32, a slightly flammable refrigerant, or a mixed refrigerant containing R32 as a main component is used.

In addition, although not shown, an outdoor fan is disposed in the vicinity of the outdoor heat exchanger 103. This outdoor fan blows air to the outdoor heat exchanger 103.

When the compressor 101 is operated by the outdoor unit control device 120 with the four-way switching valve 102 set to the switching position indicated by the dotted line during cooling operation, the high temperature and high pressure refrigerant discharged from the compressor 101 is condensed in the outdoor heat exchanger 103, and then decompressed by the motor-operated expansion valve 104 to be condensed in the water heat exchanger 201, and returns to the suction side of the compressor 101 through the accumulator 105. At this time, heat exchange between the refrigerant and water is performed in the water heat exchanger 201 functioning as an evaporator, and cold water at the desired temperature is generated.

On the other hand, when the compressor 101 is operated with the four-way switching valve 102 set to the switching position indicated by the solid line during heating operation, the high temperature and high pressure refrigerant discharged from the compressor 101 is condensed in the water heat exchanger 201, and then decompressed by the motor-operated expansion valve 104 to be evaporated in the outdoor heat exchanger 103, and returns to the suction side of the compressor 101 through the accumulator 105. At this time, heat exchange between the refrigerant and water is performed in the water heat exchanger 201 functioning as a condenser, and hot water at the desired temperature is generated.

### <Configuration of Cold/Hot Water Supply Unit 200>

The cold/hot water supply unit 200 includes the water heat exchanger 201, an expansion tank 202, a circulation pump 203, a forward header 204, a return header 205, a pressure sensor 215, and a liquid receiver 216.

The water heat exchanger 201 functions as an evaporator during cooling operation and functions as a condenser during heating operation. The water heat exchanger 201 is provided with a flow path through which the refrigerant from the outdoor unit 100 flows and a flow path through which the return water from the first to fourth floor cooling/heating panels P1 to P4 flows.

The expansion tank 202 is provided with positive and negative pressure valves, and cold water (or hot water) from the water heat exchanger 201 collects in the expansion tank 202. In addition, a water supply port 202a is provided in the upper portion of the expansion tank 202, and water is replenished from the water supply port 202a into the expansion tank 202 when necessary.

In the circulation pump 203, the suction side is connected to the expansion tank 202, while the discharge side is connected to the forward header 204. Thus, the circulation pump 203 can feed cold water (or hot water) heat-exchanged with the refrigerant passing through the water heat exchanger 201 to the first to fourth floor cooling/heating panels P1 to P4.

In addition, one ends of the first to fourth thermal valves V1 to V4 and one end of the drain plug V5 are connected to the forward header 204. Water inlets of the first to fourth floor cooling/heating panels P1 to P4 are connected to the other ends of the first to fourth thermal valves V1 to V4. The first to fourth thermal valves V1 to V4 open and close flow paths for supplying cold water (or hot water) to the first to fourth floor cooling/heating panels P1 to P4.

The first to fourth thermal valves V1 to V4 control the flow of cold water (or hot water). More specifically, the first to fourth thermal valves V1 to V4 are controlled by a cold/hot water supply unit control device 220, and perform opening/closing operation corresponding to the cooling/heating capacity setting of the first to fourth floor cooling/heating panels P1 to P4.

In addition, water outlets of the first to fourth floor cooling/heating panels P1 to P4 are connected to the return header 205. Thus, cold water (or hot water) of the first to fourth floor cooling/heating panels P1 to P4 returns to the cold/hot water supply unit 200.

The cold/hot water supply unit control device 220 is connected to the outdoor unit control device 120 through a signal line (not shown), and the outdoor unit control device 120 and the cold/hot water supply unit control device 220 operate cooperatively with each other.

### <Configuration of First to Fourth Floor Cooling/Heating Panels P1 to P4>

The first to fourth floor cooling/heating panels P1 to P4 receive the supply of cold water (or hot water) through the first to fourth thermal valves V1 to V4 to perform cooling/heating of the temperature control zone. More specifically, the first to fourth floor cooling/heating panels P1 to P4 include first to fourth water circulation pipes 301 to 304 formed in a meandering shape. In the first to fourth water circulation pipes 301 to 304, cold water (or hot water) from the water heat exchanger 201 flows.

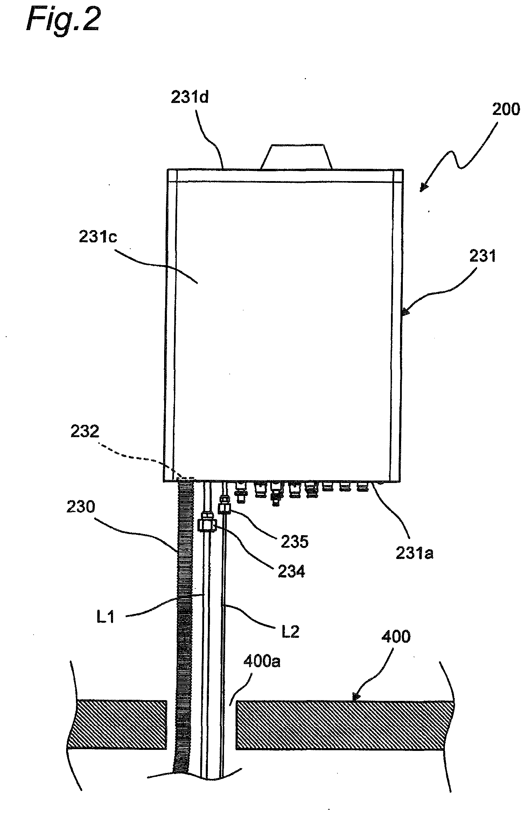

FIG. 2 is a front view of the cold/hot water supply unit 200.

This cold/hot water supply unit 200 is installed in a mounting position on a wall surface in the room and at a predetermined height from the floor 400. As shown in FIG. 2, the cold/hot water supply unit 200 is provided with refrigerant pipe connection portions 234 and 235 in a bottom frame 231a of a rectangular parallelepiped casing 231. One end of a refrigerant pipe L1 (forward pipe) is connected to the refrigerant pipe connection portion 234, and one end of a refrigerant pipe L2 (return pipe) is connected to the refrigerant pipe connection portion 235. The refrigerant pipe L1 (forward pipe) and the refrigerant pipe L2 (return pipe) are disposed on the underside of the floor 400 through a hole 400a provided in the floor 400, and are connected to the outdoor unit 100 (shown in FIG. 1).

In addition, the inside of the casing 231 communicates with the underfloor space through a discharge hose 230 whose one end is connected to a connection port 232 provided in the bottom frame 231a of the casing 231. The discharge hose 230 is an example of a discharge member.

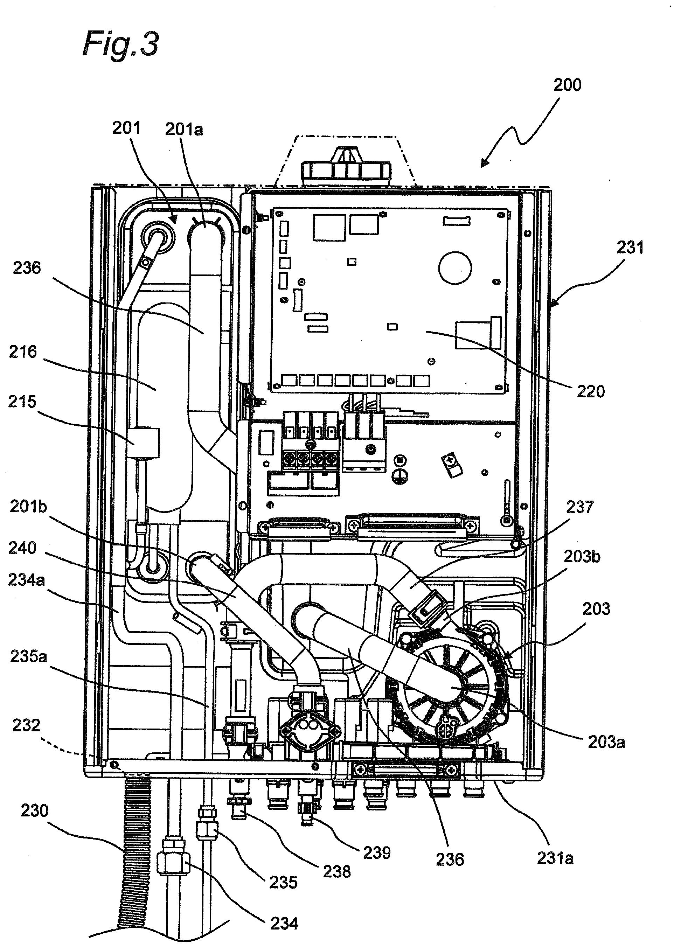

FIG. 3 is the configuration of the cold/hot water supply unit 200, and is a front view showing a state in which a front panel 231c (shown in FIG. 2) and a top plate 231d (shown in FIG. 2) are removed. In FIG. 3, the same components as those in FIG. 2 are denoted by the same reference numerals. In FIG. 3, reference numerals 238 and 239 denote drain plugs.

This cold/hot water supply unit 200 includes a rectangular parallelepiped casing 231, a circulation pump 203 attached to the bottom frame 231a of the casing 231, and the water heat exchanger 201 installed on the left side in the casing 231. In addition, the cold/hot water supply unit control device 220 as an example of a control board is attached to the electrical component portion on the right side of the water heat exchanger 201 in the casing 231.

In the water heat exchanger 201, the high temperature and high pressure refrigerant supplied from the compressor 101 of the outdoor unit 100 (shown in FIG. 1) is supplied from the refrigerant pipe connection portion 234 through a refrigerant pipe 234a. On the other hand, the low temperature and high pressure refrigerant after heat-exchanged in the water heat exchanger 201 is supplied from the refrigerant pipe connection portion 235 to the motor-operated expansion valve 104 (shown in FIG. 1) through a refrigerant pipe 235a.

The pressure sensor 215 is disposed in the refrigerant pipe 234a, and the liquid receiver 216 is disposed in the refrigerant pipe 235a.

A suction port 203a of the circulation pump 203 and a hot water supply port 201a of the water heat exchanger 201 are connected through a hot water supply pipe 236. In addition, a discharge port 203b of the circulation pump 203 and the forward header 204 (shown in FIG. 1) are connected through a discharge pipe 237. Furthermore, a water inlet 201b of the water heat exchanger 201 and the return header 205 (shown in FIG. 1) are connected through a water suction pipe 240.

In the temperature control system having the above configuration, when the compressor 101 of the outdoor unit 100 (shown in FIG. 1) is driven, the high temperature and high pressure refrigerant from the compressor 101 is supplied to the water heat exchanger 201 with the four-way switching valve 102 set in the switching position indicated by the solid line. In the water heat exchanger 201, the refrigerant is heat-exchanged with water supplied through the return header 205 and the water suction pipe 240. Next, the low temperature and high pressure liquid refrigerant after the heat exchange is fed from the water heat exchanger 201 to the motor-operated expansion valve 104 (shown in FIG. 1). On the other hand, the hot water after the heat exchange in the water heat exchanger 201 is sucked into the circulation pump 203 from the suction port 203a through the hot water supply pipe 236 by the negative pressure driven by the circulation pump 203 to be supplied from the discharge port 203b through the discharge pipe 237 and the forward header 204 (shown in FIG. 1).

According to the cold/hot water supply unit 200 with the above configuration, as shown in FIGS. 2 and 3, the inside of the casing 231 accommodating the water heat exchanger 201 communicates with the underfloor space with the discharge hose 230 (discharge member). Therefore, when the flammable refrigerant leaks rapidly into the casing 231 with the unit installed in the room, most of the flammable refrigerant immediately after leaking into the casing 231 remains as liquid without completely evaporating, and flows down through the discharge hose 230 from the inside of the casing 231 to be promptly discharged into the underfloor space. This prevents the refrigerant from leaking into the room during leakage of the flammable refrigerant. Thus, it is possible to prevent the flammable refrigerant from staying in the room, the gas concentration from increasing, and the risk of ignition and the like from increasing.

In addition, using the discharge hose 230 for the discharge member allows a path for leading the flammable refrigerant leaking into the casing 231 to the underfloor space to be easily provided, and using a hose with flexibility increases the degree of freedom of installation and improves workability.

Since the flammable refrigerant (specifically, the liquid refrigerant) leaking into the casing 231 is accumulated in the bottom portion inside the casing 231, communicating the lower portion of the casing 231 with the underfloor space with the discharge hose 230 (discharge member) allows the liquid refrigerant occupying most of the leaking flammable refrigerant to be promptly discharged from the lower portion of the casing 231 to the underfloor space through the discharge hose 230.

In addition, connecting the discharge hose 230 (discharge member) to the connection port 232 provided in the lower portion of the water heat exchanger 201 in the casing 231 allows the flammable refrigerant leaking from the refrigerant pipe connection portion of the water heat exchanger 201 to flow down into the underside of the water heat exchanger 201 to be discharged into the underfloor space with the discharge hose 230 through the connection port 232 on the lower side.

Here, the refrigerant pipe connection portion of the water heat exchanger 201 is a brazed portion where the refrigerant pipe is connected to each of the water heat exchanger 201, the pressure sensor 215, the liquid receiver 216, and the refrigerant pipe connection portions 234 and 235.

In the first embodiment, similarly to the second cover member 280 as the inner cover member of the sixth embodiment described below, an inner cover member that is disposed in the casing, and covers at least the refrigerant pipe connection portion of the refrigerant circuit in the casing and guides the leaking flammable refrigerant to the outside of the casing may be applied.

### Second Embodiment

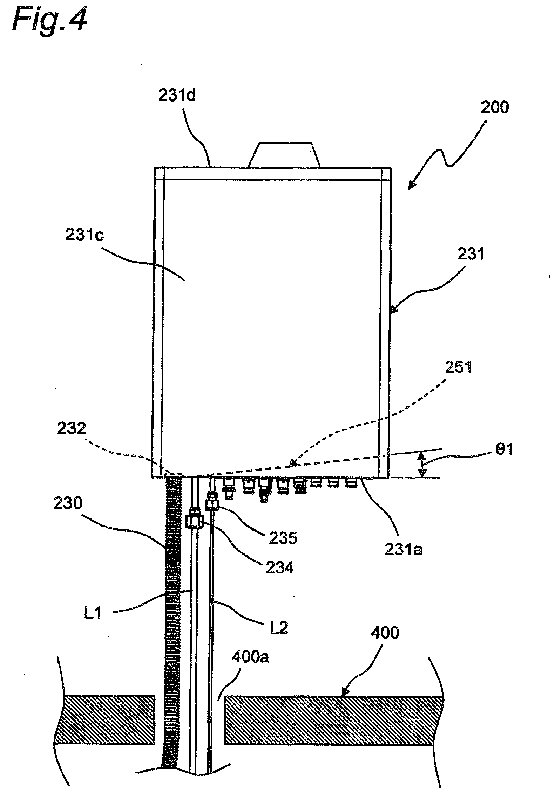

FIG. 4 is a front view of the cold/hot water supply unit 200 of a temperature control system according to a second embodiment of the present invention. This cold/hot water supply unit 200 has the same configuration as the cold/hot water supply unit 200 of the first embodiment, and the same components are denoted by the same reference numerals.

In addition, a liquid receiving member 251 is disposed on the lower side in the casing 231. The lowest position of the liquid receiving member 251 is connected to the connection port 232. This communicates the inside of the casing 231 of the cold/hot water supply unit 200 with the underfloor space through the discharge hose 230.

The inclination angle θ1 [deg] of the bottom surface of the liquid receiving member 252 is set to a value larger than a predetermined angle θ1min [deg]. The predetermined angle θ1min [deg] is appropriately determined in accordance with the refrigerant amount when the flammable refrigerant rapidly leaks in the casing 231, the configuration of the casing 231, and the like. Here, the inclination angle θ1 is an angle between the bottom surface of the liquid receiving member 252 and the horizontal surface.

The cold/hot water supply unit 200 of the second embodiment has the same effect as the cold/hot water supply unit 200 of the first embodiment.

In addition, the inclined bottom surface of the liquid receiving member 251 allows the flammable refrigerant leaking in the casing 231 (or liquid such as dew condensation water during cold water supply) to be smoothly guided to the connection port 232 to which the discharge hose 230 is connected.

In the second embodiment, the liquid receiving member 251 whose bottom surface is inclined is disposed on the lower side in the casing 231, but the bottom surface of the bottom frame 231a in the casing 231 may be inclined to smoothly guide the flammable refrigerant to the connection port 232 to which the discharge hose 230 is connected. In addition, the liquid receiving member 251 disposed on the lower side in the casing 231 is provided over substantially the entire bottom surface of the casing 231, but the liquid receiving member may be disposed at least in a region on the lower side of the refrigerant pipe connection portion in the casing 231.

In the second embodiment, similarly to the second cover member 280 as the inner cover member of the sixth embodiment described below, an inner cover member that is disposed in the casing, and covers at least the refrigerant pipe connection portion of the refrigerant circuit in the casing and guides the leaking flammable refrigerant to the outside of the casing may be applied.

### Third Embodiment

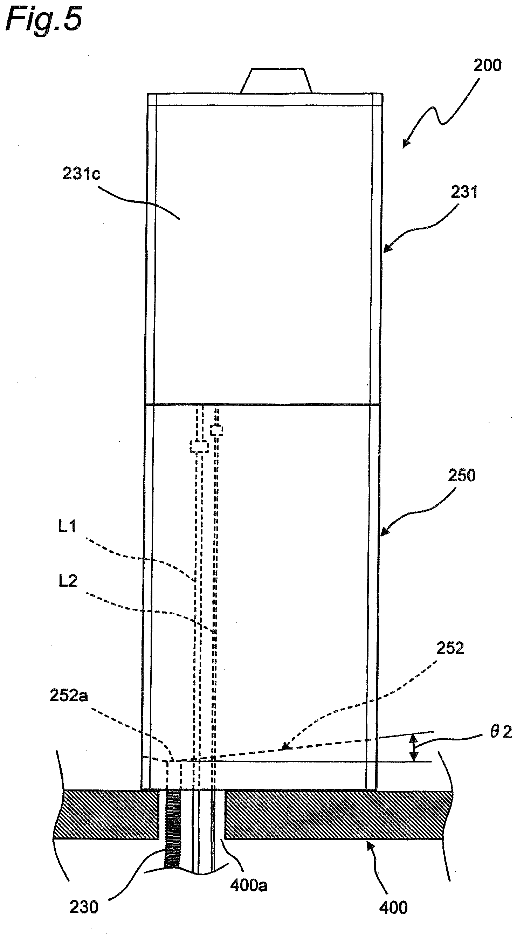

FIG. 5 is a front view of the cold/hot water supply unit 200 of a temperature control system according to a third embodiment of the present invention. This cold/hot water supply unit 200 has the same configuration as the cold/hot water supply unit 200 of the first embodiment, and the same components are denoted by the same reference numerals.

As shown in FIG. 5, the cold/hot water supply unit 200 of the third embodiment includes a mounting table 250 extending from the lower surface side of the casing 231 to the floor surface. The mounting table 250 constitutes a box-shaped passage for accommodating a part of the refrigerant pipes L1 and L2 and the discharge hose 230. The refrigerant pipes L1 and L2 are disposed on the underside of the floor 400 through the hole 400a provided in the floor 400, and are connected to the outdoor unit 100 (shown in FIG. 1).

The discharge hose 230 and the mounting table 250 constitute a discharge member.

In addition, a liquid receiving member 252 is disposed on the lower side in the mounting table 250. Connecting the upper end of the discharge hose 230 to the connection port 252a provided at the lowest position of the liquid receiving member 252 causes the inside of the casing 231 of the cold/hot water supply unit 200 to communicate with the underfloor space through the mounting table 250 and the discharge hose 230.

The inclination angle θ2 [deg] of the bottom surface of the liquid receiving member 252 is set to a value larger than a predetermined angle θ2min [deg]. The predetermined angle θ2min [deg] is appropriately determined in accordance with the refrigerant amount when the flammable refrigerant rapidly leaks from the cold/hot water supply unit 200, the configuration of the casing 231 and the mounting table 250, and the like.

In the third embodiment, the liquid receiving member 252 is disposed on the lower side in the mounting table 250, but the configuration in which at least one of the liquid receiving member and the discharge hose is not included may be used. Even in this case, the flammable refrigerant leaking from inside the casing can be guided to the underfloor space by the mounting table constituting the box-shaped passage.

The cold/hot water supply unit 200 of the third embodiment has the same effect as the cold/hot water supply unit 200 of the first embodiment.

In addition, in the cold/hot water supply unit 200 of the type installed on the wall surface, since the mounting table 250 as a box-shaped passage in the lower portion of the casing 231 covers the lower side space (the space where pipes and the like are laid) of the casing 231 installed on the wall surface, it is possible to form a passage for leading the flammable refrigerant leaking into the casing 231 to the underfloor space without the aesthetic appearance being deteriorated.

In addition, the liquid receiving member 252 disposed in the mounting table 250 allows the leaking flammable refrigerant (or liquid such as dew condensation water during cold water supply) to be reliably guided to the connection port 252a to which the discharge hose 230 (discharge member) is connected.

In addition, the inclined bottom surface of the liquid receiving member 252 allows the flammable refrigerant leaking from the lower portion of the casing 231 (or liquid such as dew condensation water during cold water supply) to be smoothly guided to the connection port 252a to which the discharge hose 230 is connected.

In addition, outside the casing 231, even if there is leaking from the refrigerant pipe connection portions 234 and 235 to which the refrigerant pipes L1 and L2 are connected, the flammable refrigerant can be received in the mounting table 250 to be discharged into the underfloor space with the discharge hose 230, which further enhances safety.

In the third embodiment, similarly to the second cover member 280 as the inner cover member of the sixth embodiment described below, an inner cover member that is disposed in the casing, and covers at least the refrigerant pipe connection portion of the refrigerant circuit in the casing and guides the leaking flammable refrigerant to the outside of the casing may be applied.

### Fourth Embodiment

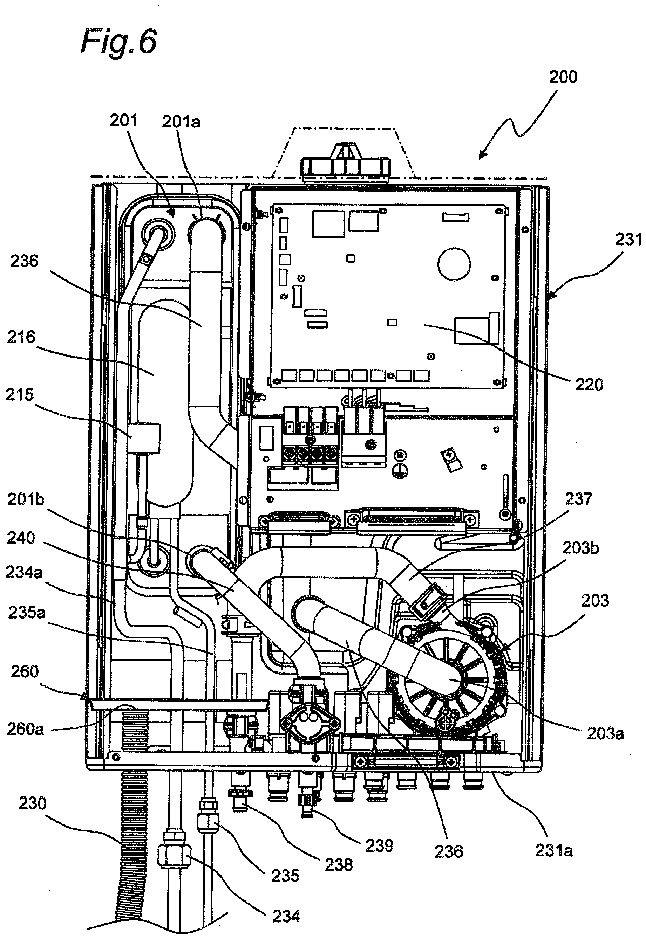

FIG. 6 is a diagram showing a configuration of the cold/hot water supply unit 200 of a temperature control system according to a fourth embodiment of the present invention. This cold/hot water supply unit 200 has the same configuration as the cold/hot water supply unit 200 of the first embodiment except for the connection portion of the discharge hose 230 and the liquid receiving member 260, and the same components are denoted by the same reference numerals.

As shown in FIG. 6, in the cold/hot water supply unit 200 of the fourth embodiment, the liquid receiving member 260 is disposed below the water heat exchanger 201 in the casing 231.

The upper end of the discharge hose 230 is connected to the connection port 260a of the liquid receiving member 260. The liquid such as dew condensation water and leakage refrigerant received by the liquid receiving member 260 is guided to the connection port 260a of the discharge hose 230. The discharge hose 230 is an example of a discharge member.

The cold/hot water supply unit 200 of the fourth embodiment has the same effect as the cold/hot water supply unit 200 of the first embodiment.

In addition, the liquid receiving member 260 disposed in the casing 231 allows the leaking flammable refrigerant (or liquid such as dew condensation water during cold water supply) to be reliably guided to the connection port 260a to which the discharge hose 230 (discharge member) is connected.

The bottom surface of the liquid receiving member 260 may be inclined, and liquid such as the leaking flammable refrigerant may be smoothly guided to the connection port 252a to which the discharge hose 230 (discharge member) is connected.

In the fourth embodiment, similarly to the second cover member 280 as the inner cover member of the sixth embodiment described below, an inner cover member that is disposed in the casing, and covers at least the refrigerant pipe connection portion of the refrigerant circuit in the casing and guides the leaking flammable refrigerant to the outside of the casing may be applied.

### Fifth Embodiment

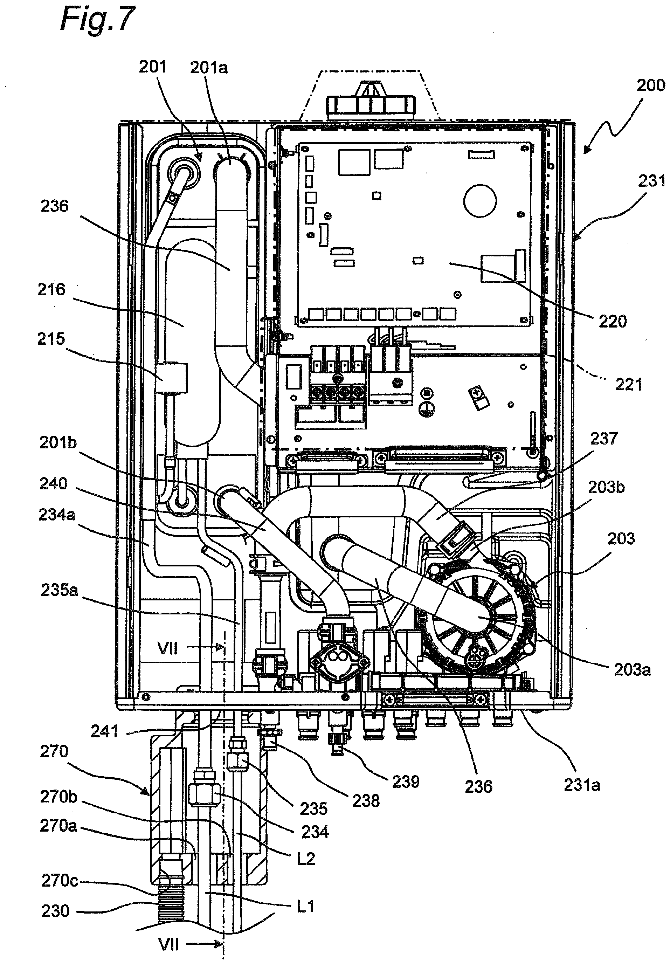

FIG. 7 is a diagram showing a configuration of the cold/hot water supply unit 200 of a temperature control system according to a fifth embodiment of the present invention. This cold/hot water supply unit 200 has the same configuration as the cold/hot water supply unit 200 of the first embodiment except for the connection portion of the discharge hose 230 and the first cover member 270, and the same components are denoted by the same reference numerals.

As shown in FIG. 7, in the cold/hot water supply unit 200 according to the fifth embodiment, the first cover member 270 is attached to the bottom frame 231a of the casing 231 so as to cover the refrigerant pipe connection portions 234 and 235. This first cover member 270 is connected to the connection port 241 of the bottom frame 231a, and has holes 270a and 270b through which the refrigerant pipe L1 connected to the refrigerant pipe connection portion 234 and the refrigerant pipe L2 connected to the refrigerant pipe connection portion 235 pass. In addition, the first cover member 270 has a connection hole 270c to which the upper end of the discharge hose 230 is connected. The gap between the hole 270a of the first cover member 270 and the refrigerant pipe L1 and the gap between the hole 270b of the first cover member 270 and the refrigerant pipe L2 are hermetically sealed with a sealant or the like.

The discharge hose 230 and the first cover member 270 constitute a discharge member.

In the cold/hot water supply unit 200 of the fifth embodiment, a board cover member 221 for covering the electrical component portion to which the cold/hot water supply unit control device 220 is attached may be attached. With this, the ignition point of the electrical component portion can be isolated from the refrigerant leaking into the casing 231, so that safety is improved.

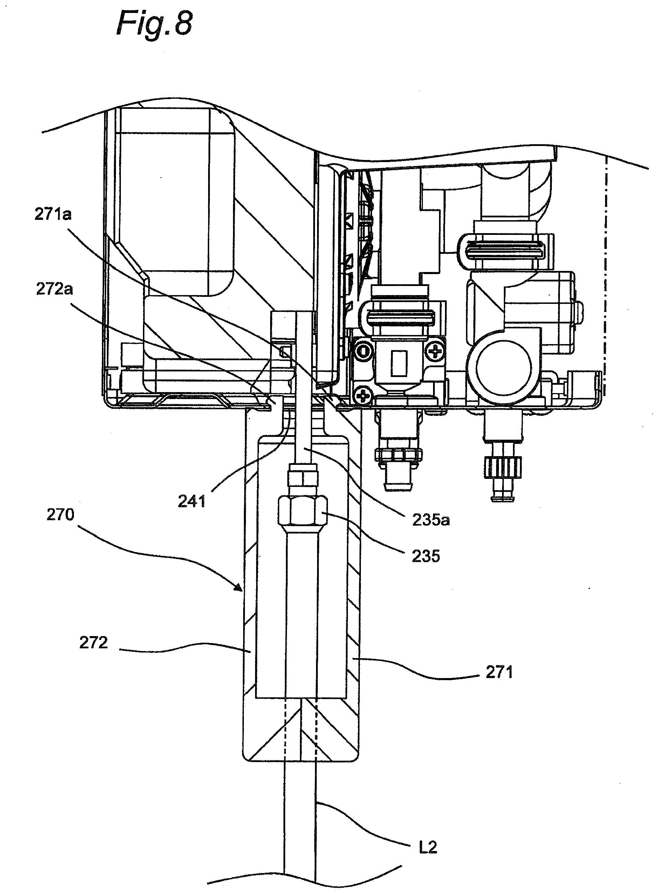

FIG. 8 is a cross-sectional view of the main part including the first cover member 270 taken along line VII-VII in FIG. 7. The first cover member 270 includes a front side cover portion 271 and a back side cover portion 272. A hook 271a is provided at the upper end of the front side cover portion 271. In addition, a hook 272a is provided at the upper end of the back side cover portion 272.

Refrigerant pipes 234a and 235a (only 235a is shown in FIG. 8) are inserted through elongated hole-shaped connection ports 241 provided in the bottom frame 231a of the casing 231. The hook 271a of the front side cover portion 271 is locked to one of the edges facing the connection port 241, and the hook 272a of the back side cover portion 272 is locked to the other edge facing the connection port 241.

According to the cold/hot water supply unit 200 with the above configuration, the discharge member (the first cover member 270 and the discharge hose 230) is connected to the connection port 241 provided below the refrigerant pipe connection portion in the casing 231, and the flammable refrigerant leaking into the casing 231 is discharged from the connection port 241 to the outside of the casing 231 with the first cover member 270 and the discharge hose 230. Therefore, when the flammable refrigerant leaks rapidly into the casing 231 with the unit 200 installed in the room, since most of the flammable refrigerant immediately after leaking into the casing 231 remains as liquid without being completely evaporated, the liquid flammable refrigerant can flow down from the inside of the casing 231 through the first cover member 270 and the discharge hose 230 to be promptly discharged into the underfloor space. Therefore, leakage of the refrigerant into the room can be prevented when the flammable refrigerant leaks, and it is possible to prevent the flammable refrigerant from staying in the room, the gas concentration from increasing, and the risk of ignition and the like from increasing.

When the vaporized flammable refrigerant is heavier than air, the gaseous flammable refrigerant also flows downward to be discharged downward from the inside of the casing 231 through the first cover member 270 and the discharge hose 230.

In addition, since the flammable refrigerant (specifically, the liquid refrigerant) leaking into the casing 231 is accumulated in the bottom portion of the casing 231, discharging the leaking refrigerant from the lower portion of the casing 231 with the first cover member 270 allows the liquid refrigerant occupying most of the flammable refrigerant leaking into the casing 231 to be promptly discharged from the lower portion of the casing 231 into the underfloor space through the first cover member 270 and the discharge hose 230.

In addition, since the first cover member 270 covers the refrigerant pipe connection portions 234 and 235 outside the casing 231, even if the flammable refrigerant leaks from the refrigerant pipe connection portions 234 and 235 outside the casing 231, the flammable refrigerant can be received inside the first cover member 270 to be discharged, which further enhances safety.

In addition, arranging the cold/hot water supply unit control device 220 (control board) inside the casing 231 and above the first cover member 270 allows the ignition point of the cold/hot water supply unit control device 220 to be separated upward from the flammable refrigerant leaking into the bottom portion inside the casing 231, which improves safety.

In addition, the inside of the casing 231 accommodating the water heat exchanger 201 communicates with the underfloor space with the first cover member 270 and the discharge hose 230 (discharge member), whereby when the flammable refrigerant leaks rapidly into the casing 231 with the unit installed in the room, most of the flammable refrigerant immediately after leaking into the casing 231 remains as liquid without completely evaporating, and flows down through the discharge hose 230 from the inside of the casing 231 to be promptly discharged into the underfloor space.

In addition, using the discharge hose 230 for the discharge member allows a path for leading the flammable refrigerant leaking into the casing 231 to the underfloor space to be easily provided, and using a hose with flexibility increases the degree of freedom of installation and improves workability.

In addition, since the flammable refrigerant (specifically, the liquid refrigerant) leaking into the casing 231 is accumulated in the bottom portion inside the casing 231, communicating the lower portion of the casing 231 with the underfloor space with the first cover member 270 and the discharge hose 230 (discharge member) allows the liquid refrigerant occupying most of the leaking flammable refrigerant to be promptly discharged from the lower portion of the casing 231 into the underfloor space through the first cover member 270 and the discharge hose 230.

The bottom portion in the casing 231 may be inclined so as to guide the liquid to the first cover member 270. In this case, the inclined bottom surface of the casing 231 allows the flammable refrigerant leaking into the casing 231 (or liquid such as dew condensation water during cold water supply) to be smoothly guided to the connection port 241.

In addition, in the cold/hot water supply unit 200 of the fifth embodiment, the liquid receiving member 251 of the second embodiment shown in FIG. 4 may be disposed on the lower side in the casing 231. In this case, the inclined bottom surface of the liquid receiving member 251 allows the flammable refrigerant leaking in the casing 231 (or liquid such as dew condensation water during cold water supply) to be smoothly guided to the connection port 241.

In the fifth embodiment, similarly to the second cover member 280 as the inner cover member of the sixth embodiment described below, an inner cover member that is disposed in the casing, and covers at least the refrigerant pipe connection portion of the refrigerant circuit in the casing and guides the leaking flammable refrigerant to the outside of the casing may be applied.

### Sixth Embodiment

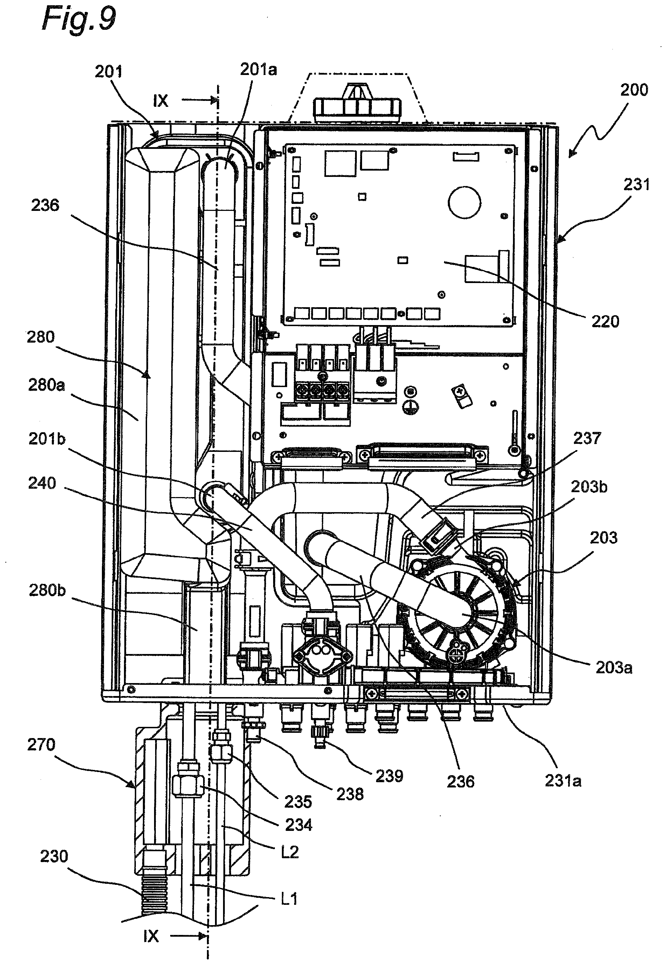

FIG. 9 is a diagram showing the configuration of the cold/hot water supply unit 200 of the temperature control system according to the sixth embodiment of the present invention. This cold/hot water supply unit 200 of the sixth embodiment has the same configuration as the cold/hot water supply unit 200 of the fifth embodiment except for a second cover member 280, and the same components are denoted by the same reference numerals.

As shown in FIG. 9, in the cold/hot water supply unit 200 according to the sixth embodiment, the first cover member 270 for covering the refrigerant pipe connection portions 234 and 235 is attached to the bottom frame 231a of the casing 231.

In addition, in the casing 231, a second cover member 280 for covering the refrigerant pipe connection portion of the refrigerant circuit is attached. The second cover member 280 is an example of an inner cover member.

This second cover member 280 is made of heat insulating material (for example, foamed resin), and includes a main body portion 280a and a guide portion 280b extending downward from the lower end of the main body portion 280a. The main body portion 280a of the second cover member 280 covers a part of the front surface side of the water heat exchanger 201 (including the pressure sensor 215 and the liquid receiver 216), that is, the refrigerant pipe connection portion.

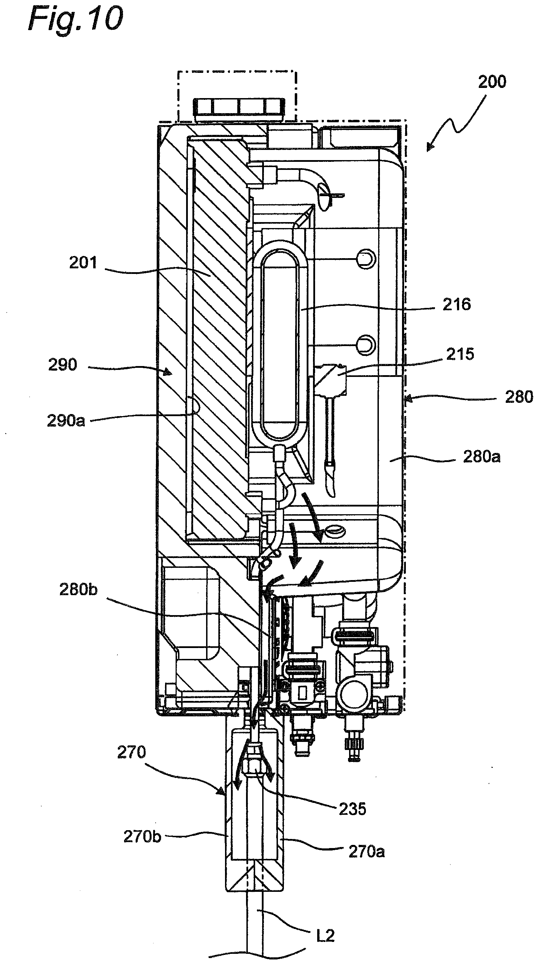

FIG. 10 is a cross-sectional view taken along line IX-IX in FIG. 9, and the same components as those in FIG. 9 are denoted by the same reference numerals.

As shown in FIG. 10, a back surface heat insulating member 290 is attached to the back surface side in the casing 231. The water heat exchanger 201 is fitted into a vertically elongated recess 290a provided in the back surface heat insulating member 290.

Here, in the refrigerant pipe 234a on which the pressure sensor 215 is disposed (shown in FIG. 3) and the refrigerant pipe 235a on which the liquid receiver 216 is disposed (shown in FIG. 3), when the flammable refrigerant leaks from a brazed pipe connection portion, as indicated with the arrows in FIG. 10, the liquid refrigerant occupying most of the flammable refrigerant immediately after leaking flows downward in the main body portion 280a of the second cover member 280 to be guided from the lower end of the main body portion 280a into the first cover member 270 through the guide portion 280b. Thereafter, the leaking flammable refrigerant is discharged into the underfloor space through the discharge hose 230 connected to the connection hole 270c (shown in FIG. 7) of the first cover member 270.

The discharge hose 230 and the first cover member 270 constitute a discharge member. The first cover member 270 includes a front side cover portion 271 and a back side cover portion 272.

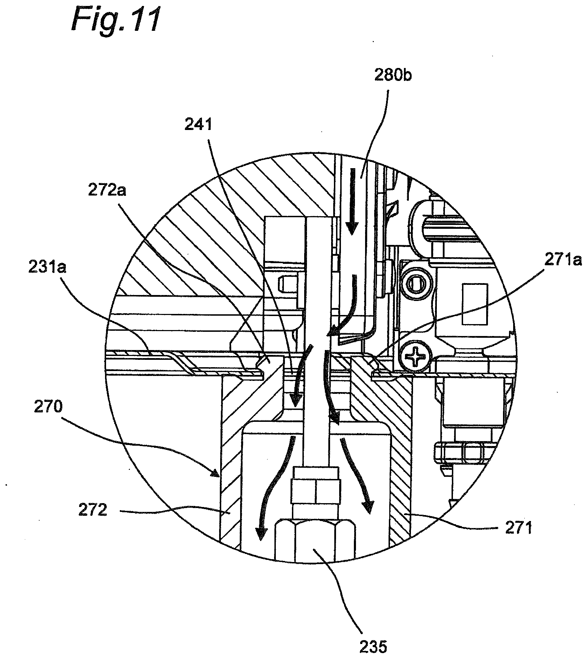

FIG. 11 is an enlarged cross-sectional view of the main part including the first cover member 270 in FIG. 9. In FIG. 11, the same components as those in FIG. 8 of the fifth embodiment are denoted by the same reference numerals.

As shown in FIG. 11, the flammable refrigerant leaking from the pipe connection portion in the upper part is guided by the guide portion 280b of the second cover member 280 to flow down into the first cover member 270 through the connection port 241 provided in the bottom frame 231a.

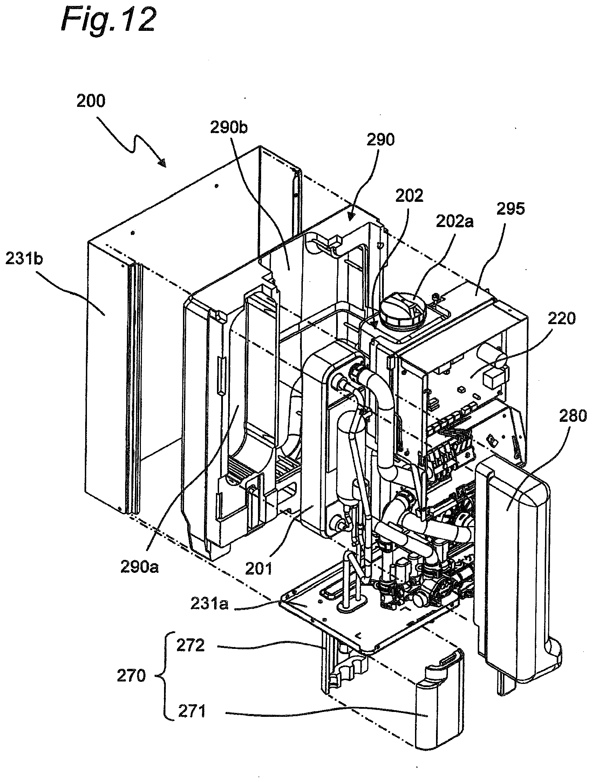

FIG. 12 is an exploded perspective view of the cold/hot water supply unit 200. In FIG. 12, the front panel 231c (shown in FIG. 2) and the top plate 231d (shown in FIG. 2) are omitted.

As shown in FIG. 12, the cold/hot water supply unit 200 includes: a bottom frame 231a, a back panel 231b surrounding the back surface side, the left side surface, and the right side surface of the bottom frame 231a, a back surface heat insulating member 290 fitted in the back panel 231b, a water heat exchanger 201 fitted in a vertically elongated recess 290a provided on the left side of the back surface heat insulating member 290, an expansion tank 202 whose back surface side is fitted in the recess 290b provided on the right side of the back surface heat insulating member 290, a front surface heat insulating member 295 for covering the front surface side of the expansion tank 202, a cold/hot water supply unit control device 220 attached to the front surface of the front surface heat insulating member 295, a second cover member 280 for covering the refrigerant pipe connection portion of the refrigerant circuit, and a first cover member 270 (a front side cover portion 271 and a back side cover portion 272) attached to the underside of the bottom frame 231a.

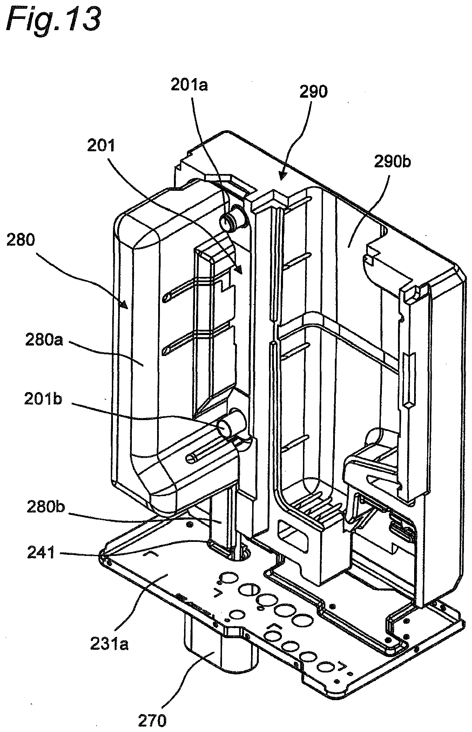

FIG. 13 is a perspective view of the bottom frame 231a of the cold/hot water supply unit 200 with the back surface heat insulating member 290 and the first and second cover members 270 and 280 attached. In FIG. 13, the same components as those in FIG. 9 are denoted by the same reference numerals.

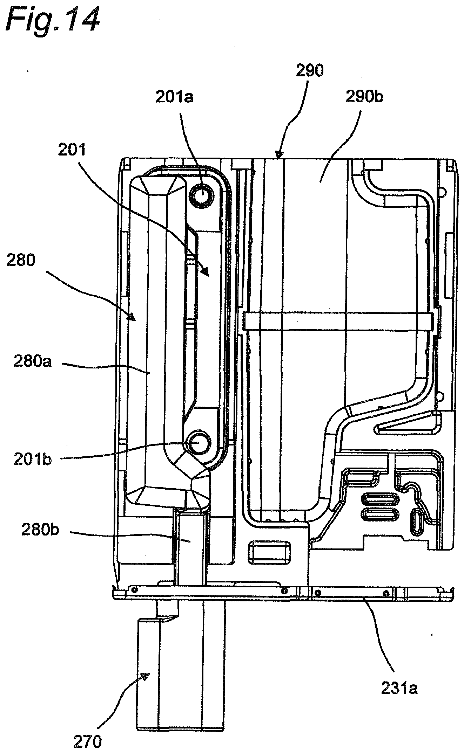

FIG. 14 is a front view of the bottom frame 231a of the cold/hot water supply unit 200 with the back surface heat insulating member 290 and the first and second cover members 270 and 280 attached. In FIG. 14, the same components as those in FIG. 9 are denoted by the same reference numerals.

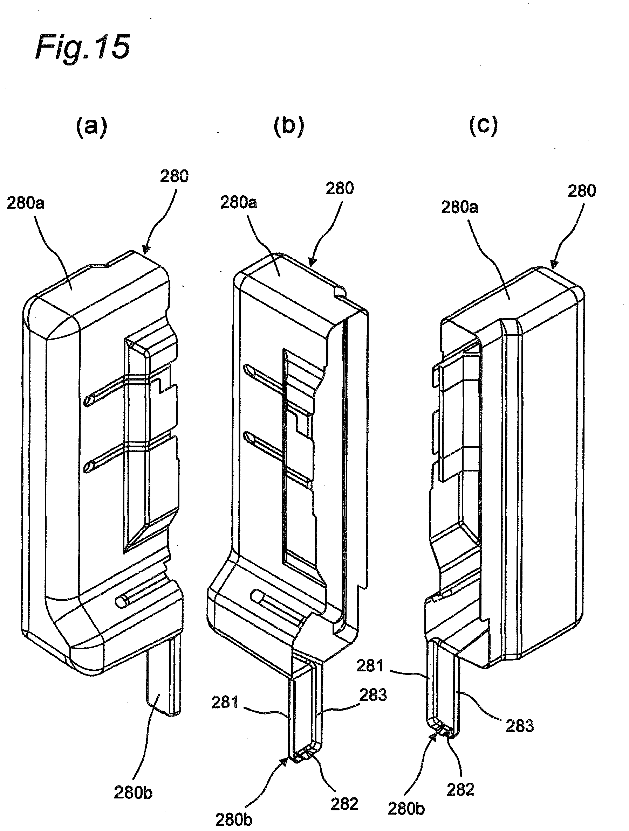

FIG. 15(a) is a perspective view of the second cover member 280 as viewed diagonally from the front right and obliquely from above. FIG. 15(b) is a perspective view of the second cover member 280 as viewed diagonally from the back right and obliquely from above. FIG. 15(c) is a perspective view of the second cover member 280 as viewed diagonally from the back left and obliquely from above.

As shown in FIGS. 15(a) to 15(c), the main body portion 280a of the second cover member 280 has a vertically elongated dome shape whose back surface side opens. The guide portion 280b having a rectangular shape and extending downward from the lower end of the main body portion 280a and the edge on the opening side is provided with peripheral walls 281, 282, and 283 on each side excluding the upper side.

The cold/hot water supply unit 200 of the sixth embodiment has the same effect as the cold/hot water supply unit 200 of the fifth embodiment.

In addition, according to the cold/hot water supply unit 200 with the above configuration, the second cover member 280 (inner cover member) disposed in the casing 231 accommodating the water heat exchanger 201 covers at least the refrigerant pipe connection portion of the refrigerant circuit and guides the leaking flammable refrigerant to the outside of the casing 231. Thus, when the flammable refrigerant leaks rapidly into the casing 231, since most of the flammable refrigerant immediately after leaking from at least the refrigerant pipe connection portion of the refrigerant circuit covered with the second cover member 280 remains as liquid, the flammable refrigerant is guided by the second cover member 280 to be discharged. Therefore, even in an environment where the cold/hot water supply unit 200 is installed in a room, it is possible to perform processing so that the flammable refrigerant guided by the second cover member 280 does not leak into the room from inside the casing 231. Thus, leakage of the refrigerant into the room can be prevented when the flammable refrigerant leaks, and it is possible to prevent the flammable refrigerant from staying in the room, the gas concentration from increasing, and the risk of ignition and the like from increasing.

In addition, covering the water heat exchanger 201 with the second cover member 280 allows the flammable refrigerant to be discharged to the outside of the casing 231 without diffusing into the casing 231 even if the flammable refrigerant leaks from the refrigerant pipe connection portion of the water heat exchanger 201 or the water heat exchanger 201 itself.

In addition, covering the whole refrigerant circuit in the casing 231 with the second cover member 280 allows the flammable refrigerant to be reliably discharged to the outside of the casing 231 without diffusing into the casing 231 even if the flammable refrigerant leaks from any portion of the refrigerant circuit in the casing 231.

In addition, covering at least part of the water heat exchanger 201 by the second cover member 280 made of a heat insulating material allows the inner cover member to also serve as a heat insulating material for insulating the water heat exchanger 201 and to enhance the heat insulating effect.

In addition, engaging the guide portion 280b of the second cover member 280 with the connection port 241 provided in the casing 231 allows the second cover member 280 to be easily positioned and the leaking flammable refrigerant to be guided into the connection port 241.

The guide portion 280b of the cover member 280 may be configured to be engaged with the connection port 241 provided in the bottom frame 231a of the casing 231. Thus, positioning of the cover member 280 is made possible together with the guiding of the leaking refrigerant to the connection port 241.

### Seventh Embodiment

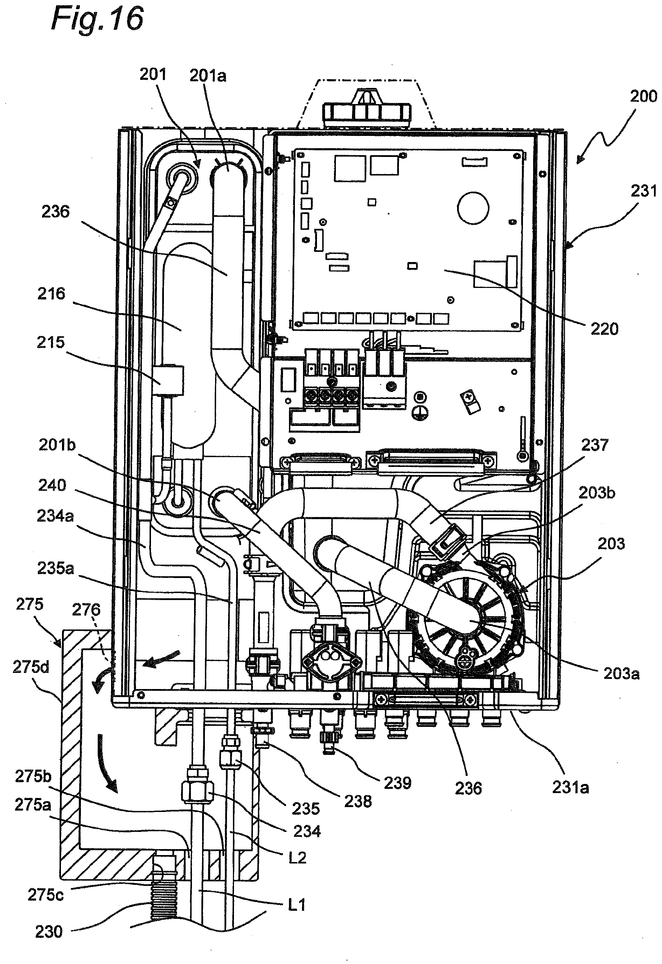

FIG. 16 is a diagram showing a configuration of the cold/hot water supply unit 200 of the temperature control system according to the seventh embodiment of the present invention. This cold/hot water supply unit 200 has the same configuration as the cold/hot water supply unit 200 of the fifth embodiment except for a first cover member 275, and the same components are denoted by the same reference numerals.

As shown in FIG. 16, in the cold/hot water supply unit 200 according to the seventh embodiment, the first cover member 275 for covering the refrigerant pipe connection portions 234 and 235 is attached to the bottom frame 231a of the casing 231. This first cover member 275 has holes 275a and 275b through which the refrigerant pipe L1 connected to the refrigerant pipe connection portion 234 and the refrigerant pipe L2 connected to the refrigerant pipe connection portion 235 pass. In addition, the first cover member 275 has a connection hole 275c to which the upper end of the discharge hose 230 is connected.

The discharge hose 230 and the first cover member 275 constitute a discharge member.

Furthermore, the first cover member 275 includes a guide passage 275d for guiding to the connection hole 275c to which the discharge hose 230 is connected through the connection port 276 provided on the left side surface of the casing 231.

The cold/hot water supply unit 200 of the seventh embodiment has the same effect as the cold/hot water supply unit 200 of the fifth embodiment.

In addition, since the flammable refrigerant (specifically, the liquid refrigerant) leaking into the casing 231 is accumulated in the bottom portion of the casing 231, discharging the leaking refrigerant from the side portion of the casing 231 below the refrigerant pipe connection portion in the casing 231 with the first cover member 275 allows the liquid refrigerant occupying most of the leaking flammable refrigerant to be promptly discharged from the lower portion of the casing 231 into the underfloor space through the first cover member 275 and the discharge hose 230.

In addition, connecting the first cover member 275 to the connection port 276 provided on the left side surface of the water heat exchanger 201 in the casing 231 allows the flammable refrigerant leaking from the refrigerant pipe connection portion of the water heat exchanger 201 to flow down into the underside of the water heat exchanger 201 and then to be discharged into the underfloor space with the first cover member 275 and the discharge hose 230 through the connection port 276 on the lower side and the left side surface.

In the seventh embodiment, similarly to the second cover member 280 as the inner cover member of the sixth embodiment, an inner cover member that is disposed in the casing, and covers at least the refrigerant pipe connection portion of the refrigerant circuit in the casing and guides the leaking flammable refrigerant to the outside of the casing may be applied.

### Eighth Embodiment

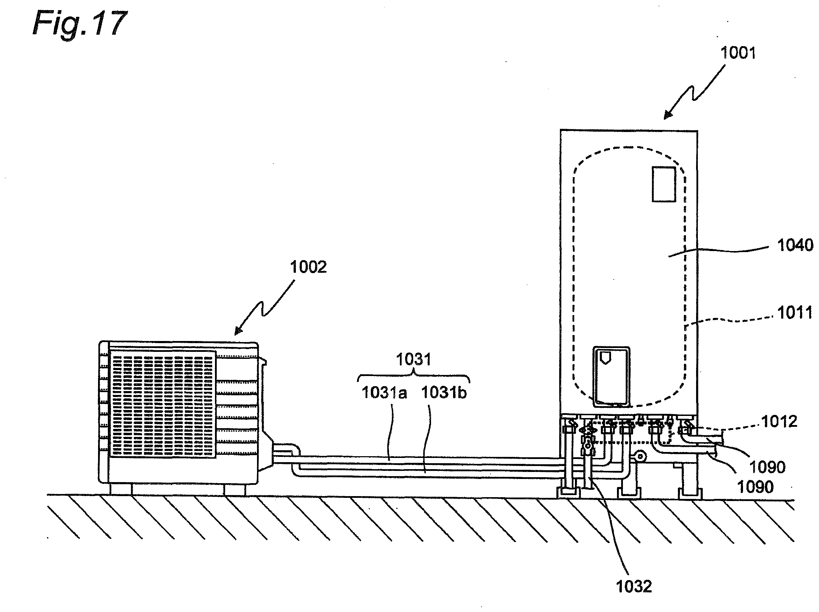

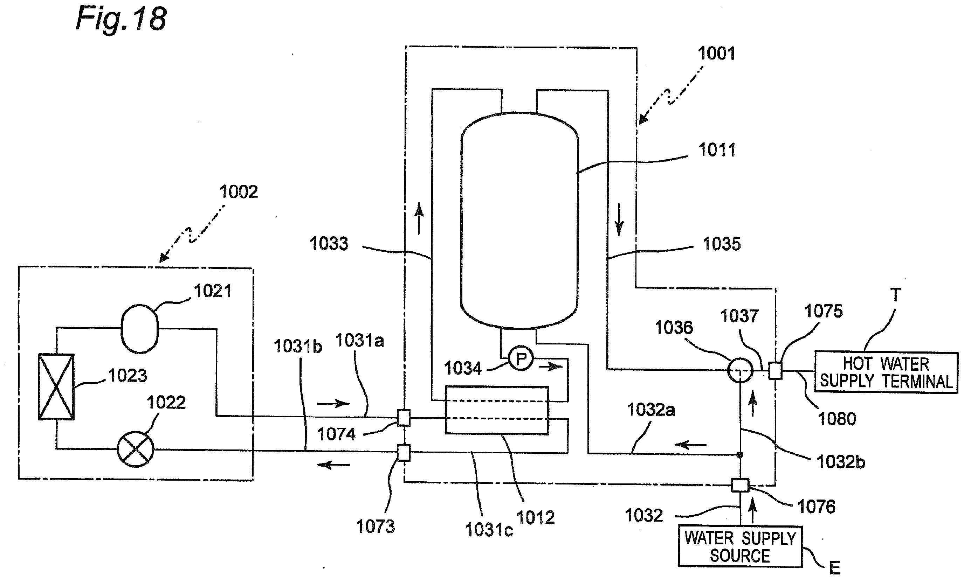

FIG. 17 is a simplified configuration diagram showing a hot water supply apparatus including a hot water storage unit 1001 according to an eighth embodiment of the present invention, and FIG. 18 is a circuit diagram of the hot water supply apparatus.

As shown in FIGS. 17 and 18, the hot water supply apparatus of the eighth embodiment includes the hot water storage unit 1001 and a heat pump unit 1002.

The hot water storage unit 1001 includes a casing 1040, a hot water storage tank 1011 disposed in the casing 1040, and a water heat exchanger 1012 for generating hot water stored in the hot water storage tank 1011. The hot water storage unit 1001 is an example of a water heat exchanger accommodation unit installed in the room.

A water supply pipe 1032 connected to a water supply source E is connected to the bottom portion of the hot water storage unit 1001. Thus, the hot water storage unit 1001 can introduce the city water (tap water) of the water supply source E into the bottom portion of the hot water storage tank 1011 through the water inlet pipe 1032a branching from the water supply pipe 1032 connected to the water pipe connection port 1076. In addition, one end of a circulation pipe 1033 is connected to the bottom portion of the hot water storage tank 1011. On the other hand, the other end of the circulation pipe 1033 is connected to the top portion of the hot water storage tank 1011. A circulation pump 1034 and a water heat exchanger 1012 are disposed in the circulation pipe 1033.

In addition, a mixing valve 1036 is connected to the top portion of the hot water storage tank 1011 through a hot water supply pipe 1035. A water inlet pipe 1032b branching from the water supply pipe 1032 and a hot water supply terminal T are connected to the mixing valve 1036. Thus, the hot water supply apparatus can supply hot water at a desired temperature in the hot water supply terminal T by mixing the hot water discharged from the top portion of the hot water storage tank 1011 and the water supplied from the water supply source E with the mixing valve 1036. Although omitted in FIG. 18, a bath circulation pipe 1090 shown in FIG. 17 is connected to the hot water storage tank 1011.

The water heat exchanger 1012 is disposed under the hot water storage tank 1011, and serves as a condenser. More specifically, in the water heat exchanger 1012, the high temperature refrigerant from the heat pump unit 1002 exchanges heat with the water from the hot water storage tank 1011. Thus, in the hot water storage unit 1001, the water from the hot water storage tank 1011 can be heated by the water heat exchanger 1012 to be returned to the hot water storage tank 1011.

The heat pump unit 1002 does not include the water heat exchanger 1012, but includes a compressor 1021 connected to the water heat exchanger 1012, an expansion means 1022, and an air heat exchanger 1023. The compressor 1021, the water heat exchanger 1012, the expansion means 1022, and the air heat exchanger 1023 are annularly connected through a refrigerant pipe 1031 (a forward pipe 1031a and a return pipe 1031b). The air heat exchanger 1023 serves as an evaporator. The expansion means 1022 is, for example, an expansion valve.

The forward pipe 1031a of the refrigerant pipe 1031 is connected to one end of the refrigerant pipe 1031c through the refrigerant pipe connection portion 1074. On the other hand, the return pipe 1031b is connected to the other end of the refrigerant pipe 1031c through the refrigerant pipe connection portion 1073. The refrigerant pipe 1031c connects the refrigerant pipe connection portions 1073 and 1074 through the water heat exchanger 1012.

Annularly connecting the compressor 1021, the expansion means 1022, the air heat exchanger 1023, and the water heat exchanger 1012 constitutes a refrigerant circuit. In this refrigerant circuit, as an example of a flammable refrigerant, a single refrigerant of R32, a slightly flammable refrigerant, or a mixed refrigerant containing R32 as a main component is used.

When the compressor 1021 and the circulation pump 1034 are driven, the water in the hot water storage tank 1011 flows through the circulation pipe 1033 from the bottom portion of the hot water storage tank 1011. At this time, the water flowing through the circulation pipe 1033 becomes hot water due to heat exchange with the high temperature refrigerant in the water heat exchanger 1012, and then returns into the hot water storage tank 1011 from the top portion of the hot water storage tank 1011. Continuing this operation allows hot water at high temperature to be stored in the hot water storage tank 1011. The hot water in the hot water storage tank 1011 is supplied to the hot water supply terminal T and the bath through the water pipe 1037, the water pipe connection port 1075, and the water pipe 1080.

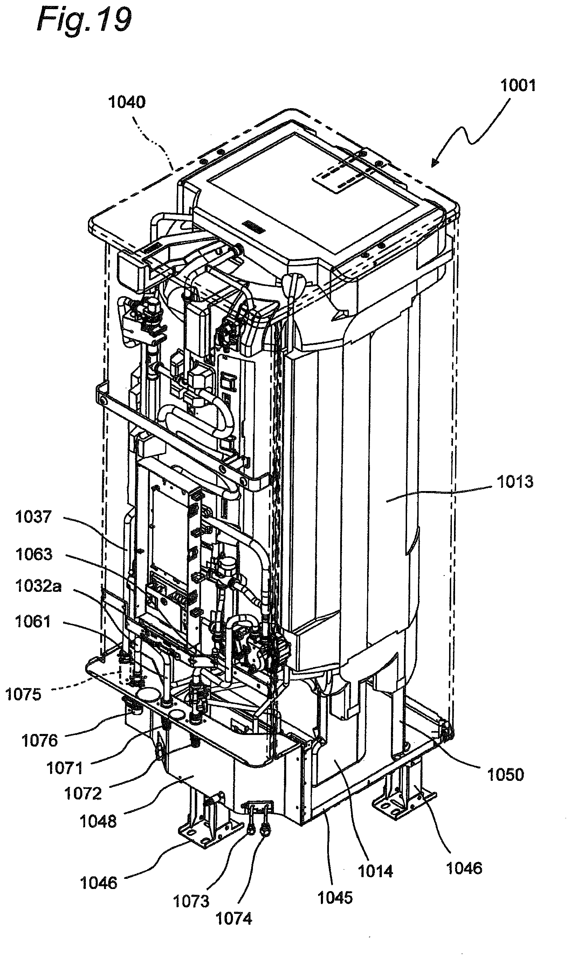

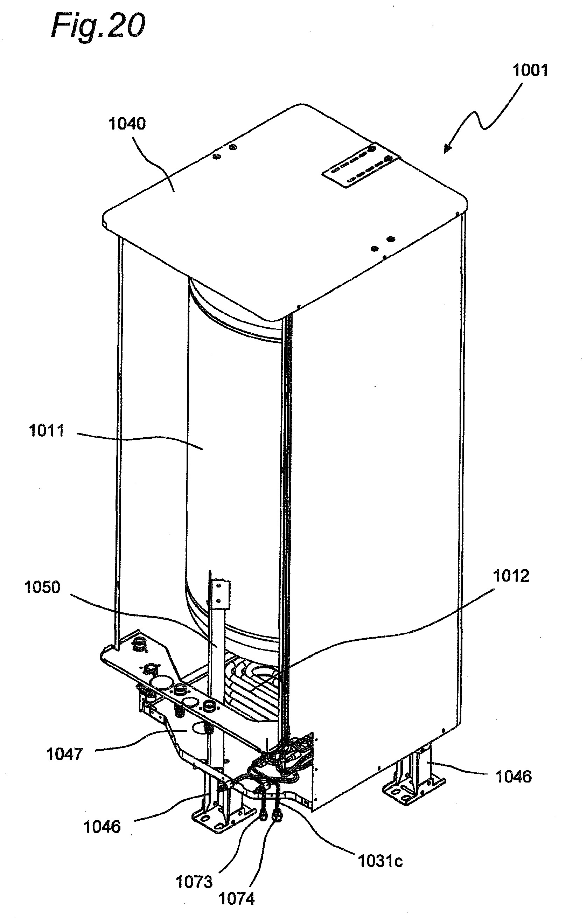

FIG. 19 is a perspective view of the hot water storage unit 1001, and FIG. 20 shows a state in which pipes and the like in FIG. 19 are removed. In FIGS. 19 and 20, the same components as those in FIGS. 17 and 18 are denoted by the same reference numerals.

As shown in FIGS. 19 and 20, the hot water storage unit 1001 includes a casing 1040. In this casing 1040, a hot water storage tank 1011, a water heat exchanger 1012, a hot water supply pipe 1035 (shown in FIG. 18), a water inlet pipe 1032a, a water inlet pipe 1032b (shown in FIG. 18), a refrigerant pipe 1031c, and the like are accommodated. The hot water storage tank 1011 is covered with a heat insulating material 1013. In addition, the water heat exchanger 1012 is also covered with a heat insulating material 1014.

The hot water storage tank 1011 is supported by the three can body legs 1050 and stands on the bottom plate 1045. One of the three can body legs 1050 is on the front surface side and the other two on the back surface side.

The hot water storage tank 1011 is separated from the bottom plate 1045 with the support of the can body legs 1050. A water heat exchanger 1012 is disposed between the bottom surface of the hot water storage tank 1011 and the bottom plate 1045.

A maintenance opening portion 1047 is provided in the front portion of the casing 1040. In addition, a lid plate 1048 is detachably attached to the casing 1040 so as to cover the maintenance opening portion 1047.

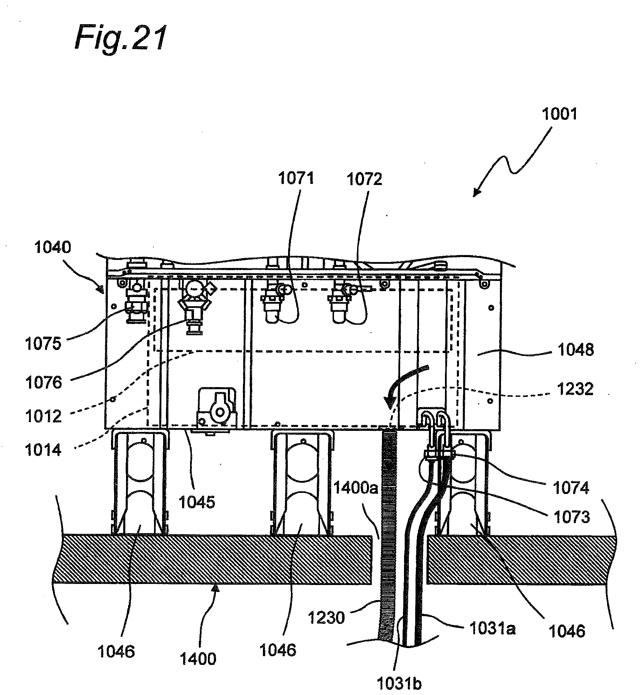

FIG. 21 is a front view of the lower portion of the hot water storage unit 1001. In FIG. 21, the same components as those in FIGS. 19 and 20 are denoted by the same reference numerals.

As shown in FIG. 21, water pipe connection ports 1071 and 1072 are provided in front of the lid plate 1048. The water pipe connection ports 1071 and 1072 are connected to the top portion of the hot water storage tank 1011 through water pipes 1061 and 1063 (shown in FIG. 19) in the casing 1040. Thus, connecting a water pipe (not shown) to the water pipe connection ports 1071 and 1072 allows hot water in the hot water storage tank 1011 to flow into other hot water supply terminals. In FIG. 17, illustration of the water pipes 1061 and 1063 and the water pipe connection ports 1071 and 1072 is omitted.

Refrigerant pipe connection portions 1073 and 1074 are provided on one side of the water pipe connection ports 1071 and 1072. The positions of the refrigerant pipe connection portions 1073 and 1074 in the height direction are lower than the positions of the water pipe connection ports 1071 and 1072 in the height direction.

In addition, water pipe connection ports 1075 and 1076 are provided on the other side of the water pipe connection ports 1071 and 1072.

As shown in FIG. 21, the hot water storage unit 1001 with the above configuration is installed on the floor 1400. In the hot water storage unit 1001, one end of the return pipe 1031b of the refrigerant pipe 1031 is connected to the refrigerant pipe connection portion 1073, and one end of the forward pipe 1031a of the refrigerant pipe 1031 is connected to the refrigerant pipe connection portion 1074. The refrigerant pipe 1031 (forward pipe 1031a and return pipe 1031b) is disposed on the underside of the floor 1400 through the hole 1400a provided in the floor 1400 and is connected to the heat pump unit 1002 (shown in FIG. 17) installed outside the room.

In addition, the inside of the casing 1040 communicates with the underfloor space through a discharge hose 1230 having one end connected to the bottom plate 1045 of the casing 1040. The discharge hose 1230 is an example of the first cover member.

In addition, in the hot water storage unit 1001 with the above configuration, the heat insulating material 1014 (inner cover member) disposed in the casing 1040 covers the refrigerant pipe connection portion of the refrigerant circuit and guides the leaking flammable refrigerant to the outside of the casing 1040. For example, when the flammable refrigerant leaks rapidly into the casing 1040, since most of the flammable refrigerant immediately after leaking remains as liquid, the flammable refrigerant is guided by the heat insulating material 1014 to be discharged into the underfloor space with the discharge hose 1230 through the connection port 1232.

Therefore, even in an environment where the hot water storage unit 1001 is installed in a room, it is possible to perform processing of discharging the flammable refrigerant into the underfloor space with the discharge hose 1230 so as to prevent the flammable refrigerant guided by the heat insulating material 1014 from leaking from inside the casing 1040 into the room. Thus, leakage of the refrigerant into the room can be prevented when the flammable refrigerant leaks, and it is possible to prevent the flammable refrigerant from staying in the room, the gas concentration from increasing, and the risk of ignition and the like from increasing.

In addition, covering the water heat exchanger 1012 with the heat insulating material 1014 (inner cover member) allows the flammable refrigerant to be discharged to the outside of the casing 1040 without diffusing into the casing 1040 even if the flammable refrigerant leaks from the refrigerant pipe connection portion of the water heat exchanger 1012 or the water heat exchanger 1012 itself.

In addition, covering the whole refrigerant circuit in the casing 1040 with the heat insulating material 1014 allows the flammable refrigerant to be reliably discharged to the outside of the casing 1040 without diffusing into the casing 1040 even if the flammable refrigerant leaks from any portion of the refrigerant circuit in the casing 1040.

In addition, covering the water heat exchanger 1012 by the heat insulating material 1014 for the inner cover member allows the inner cover member to also serve as a heat insulating material for insulating the water heat exchanger 1012 and to enhance the heat insulating effect.

In addition, using the discharge hose 1230 for the discharge member allows a path for leading the flammable refrigerant leaking into the casing 1040 to the underfloor space to be easily provided, and using a hose with flexibility increases the degree of freedom of installation and improves workability.

In addition, since the flammable refrigerant (specifically, the liquid refrigerant) leaking into the casing 1040 is accumulated in the bottom portion inside the casing 1040, communicating the lower portion of the casing 1040 with the underfloor space with the discharge hose 1230 (discharge member) allows the liquid refrigerant occupying most of the leaking flammable refrigerant to be promptly discharged from the lower portion of the casing 1040 to the underfloor space through the discharge hose 1230.

In addition, connecting the discharge hose 1230 (discharge member) to the connection port 1232 provided in the lower portion of the water heat exchanger 1012 in the casing 1040 allows the flammable refrigerant leaking from the refrigerant pipe connection portion of the water heat exchanger 1012 to flow down into the underside of the water heat exchanger 1012 to be discharged into the underfloor space with the discharge hose 1230 through the connection port 1232 on the lower side.

### Ninth Embodiment

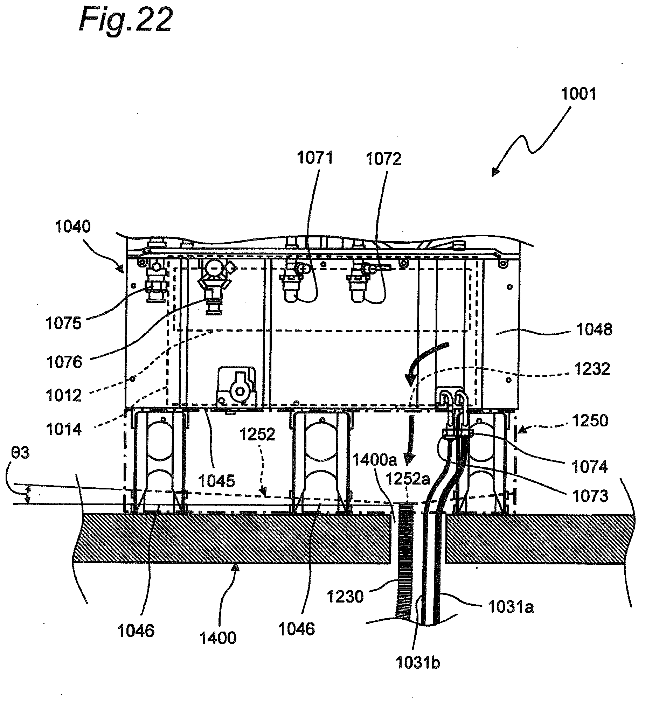

FIG. 22 is a front view of a lower portion of a hot water storage unit 1001 according to a ninth embodiment of the present invention. The hot water storage unit 1001 of the ninth embodiment has the same configuration as the hot water storage unit 1001 of the eighth embodiment except for the absence of the connection port 1232, and the discharge hose 1230 and the decorative panel 1250, and FIGS. 17 to 20 are cited.

As shown in FIG. 22, in the hot water storage unit 1001 of the ninth embodiment, a decorative panel 1250 is disposed between the bottom plate 1045 of the casing 1040 and the floor 1400 so as to surround the whole circumference .

The decorative panel 1250 constitutes a box-shaped passage accommodating a part of the refrigerant pipes 1031 (1031a and 1031b) and the discharge hose 1230. The refrigerant pipes 1031 (1031a and 1031b) are disposed on the underside of the floor 1400 through the hole 1400a provided in the floor 1400, and are connected to the heat pump unit 1002 (shown in FIG. 8).

The discharge hose 1230 and the decorative panel 1250 constitute a discharge member.

In addition, a liquid receiving member 1252 is disposed on the lower side in the decorative panel 1250. Connecting the upper end of the discharge hose 1230 to the connection port 1252a provided at the lowest position of the liquid receiving member 1252 causes the inside of the casing 1040 of the hot water storage unit 1001 to communicate with the underfloor space through the decorative panel 1250 and the discharge hose 1230.

The inclination angle θ3 [deg] of the bottom surface of the liquid receiving member 1252 is set to a value larger than a predetermined angle θ3min [deg]. The predetermined angle θ3min [deg] is appropriately determined in accordance with the refrigerant amount when the flammable refrigerant rapidly leaks from the hot water storage unit 1001, the configuration of the casing 1040 and the decorative panel 1250, and the like.

In the ninth embodiment, the liquid receiving member 1252 is disposed on the lower side in the decorative panel 1250, but the configuration in which at least one of the liquid receiving member and the discharge hose is not included may be used. Even in this case, the flammable refrigerant leaking from inside the casing can be guided to the underfloor space by the mounting table constituting the box-shaped passage.

The hot water storage unit 1001 of the ninth embodiment has the same effect as the hot water storage unit 1001 of the eighth embodiment.

In addition, in the hot water storage unit 1001 of the type installed on the wall surface, since the decorative panel 1250 as a box-shaped passage in the lower portion of the casing 1040 covers the lower side space (the space where pipes and the like are laid) of the casing 1040 installed on the wall surface, it is possible to form a passage for leading the flammable refrigerant leaking into the casing 1040 to the underfloor space without the aesthetic appearance being deteriorated.

In addition, the liquid receiving member 1252 disposed in the decorative panel 1250 allows the leaking flammable refrigerant (or liquid such as dew condensation water during cold water supply) to be reliably guided to the connection port 1252a to which the discharge hose 1230 (discharge member) is connected.

In addition, the inclined bottom surface of the liquid receiving member 1252 allows the flammable refrigerant leaking from the lower portion of the casing 1040 (or liquid such as dew condensation water during cold water supply) to be smoothly guided to the connection port 1252a to which the discharge hose 1230 is connected.

In addition, outside the casing 1040, even if there is leaking from the refrigerant pipe connection portions 1074 and 1073 to which the refrigerant pipes 1031 (1031a and 1031b) are connected, the flammable refrigerant can be received in the decorative panel 1250 to be discharged into the underfloor space with the discharge hose 1230, which further enhances safety.

### Tenth Embodiment

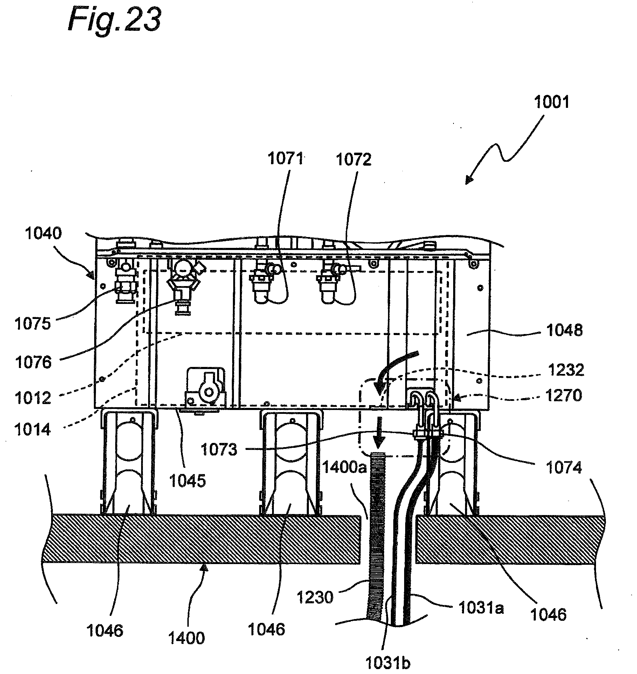

FIG. 23 is a front view of a lower portion of a hot water storage unit 1001 according to a tenth embodiment of the present invention. The hot water storage unit 1001 of the tenth embodiment has the same configuration as the hot water storage unit 1001 of the eighth embodiment except for the discharge hose 1230 and the first cover member 1270, and FIGS. 17 to 20 are cited.

As shown in FIG. 23, in the hot water storage unit 1001 of the tenth embodiment, a first cover member 1270 for covering the refrigerant pipes 1031 (forward pipe 1031a and return pipe 1031b) is attached to the lid plate 1048. This first cover member 1270 has a hole (not shown) through which the forward pipe 1031a of the refrigerant pipes 1031 connected to the refrigerant pipe connection portion 1074 and the return pipe 1031b of the refrigerant pipes 1031 connected to the refrigerant pipe connection portion 1073 pass. In addition, the first cover member 1270 has a connection hole (not shown) to which the upper end of the discharge hose 1230 is connected. In addition, the inside of the casing 1040 communicates with the inside of the first cover member 1270 through the connection port 1232 provided in the lower part of the water heat exchanger 1012 in the casing 1040.

The discharge hose 1230 and the first cover member 1270 constitute a discharge member.

In addition, in the hot water storage unit 1001 with the above configuration, the heat insulating material 1014 (inner cover member) disposed in the casing 1040 covers the refrigerant pipe connection portion of the refrigerant circuit and guides the leaking flammable refrigerant to the outside of the casing 1040. For example, when the flammable refrigerant leaks rapidly into the casing 1040, since most of the flammable refrigerant immediately after leaking remains as liquid, the flammable refrigerant can be guided by the heat insulating material 1014 to flow down from the connection port 1232 through the first cover member 1270 and the discharge hose 1230 to be discharged rapidly into the underfloor space.

Therefore, even in an environment where the hot water storage unit 1001 is installed in a room, it is possible to perform processing of discharging the flammable refrigerant into the underfloor space with the first cover member 1270 and the discharge hose 1230 so as to prevent the flammable refrigerant guided by the heat insulating material 1014 from leaking from inside the casing 1040 into the room. Thus, leakage of the refrigerant into the room can be prevented when the flammable refrigerant leaks, and it is possible to prevent the flammable refrigerant from staying in the room, the gas concentration from increasing, and the risk of ignition and the like from increasing.

When the vaporized flammable refrigerant is heavier than air, the gaseous flammable refrigerant also flows downward to be discharged downward from the inside of the casing 1040 through the first cover member 1270 and the discharge hose 1230.

In addition, since the flammable refrigerant (specifically, the liquid refrigerant) leaking into the casing 1040 is accumulated in the bottom portion of the casing 1040, discharging the leaking refrigerant from the lower portion of the casing 1040 with the first cover member 1270 allows the liquid refrigerant occupying most of the flammable refrigerant leaking into the casing 1040 to be promptly discharged from the lower portion of the casing 1040 into the underfloor space through the first cover member 1270 and the discharge hose 1230.

In addition, since the first cover member 1270 covers the refrigerant pipe connection portions 1234 and 1235 outside the casing 1040, even if the flammable refrigerant leaks from the refrigerant pipe connection portions 1234 and 1235 outside the casing 1040, the flammable refrigerant can be received inside the first cover member 1270 to be discharged, which further enhances safety.

In addition, the inside of the casing 1040 accommodating the water heat exchanger 1012 communicates with the underfloor space with the first cover member 1270 and the discharge hose 1230 (discharge member). Therefore, when the flammable refrigerant leaks rapidly into the casing 1040 with the unit installed in the room, most of the flammable refrigerant immediately after leaking into the casing 1040 remains as liquid without completely evaporating, and flows down through the discharge hose 1230 from the inside of the casing 1040, to be promptly discharged into the underfloor space.

In addition, using the discharge hose 1230 for the discharge member allows a path for leading the flammable refrigerant leaking into the casing 1040 to the underfloor space to be easily provided, and using a hose with flexibility increases the degree of freedom of installation and improves workability.

The hot water storage unit 1001 of the tenth embodiment has the same effect as the hot water storage unit 1001 of the eighth embodiment.

### Eleventh Embodiment

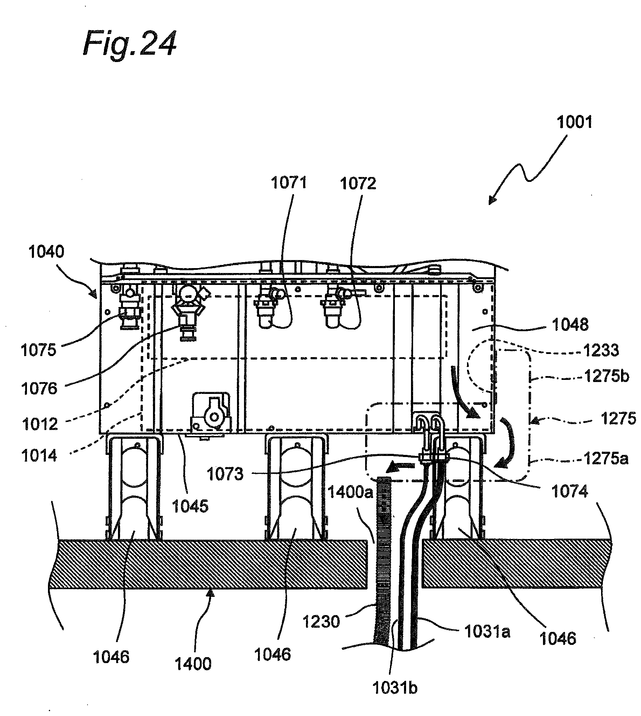

FIG. 24 is a front view of a lower portion of a hot water storage unit 1001 according to an eleventh embodiment of the present invention. The hot water storage unit 1001 of the eleventh embodiment has the same configuration as the hot water storage unit 1001 of the tenth embodiment except for the first cover member 1275, and FIGS. 17 to 20 are cited.

As shown in FIG. 24, in the hot water storage unit 1001 of the eleventh embodiment, a first cover member 1275 for covering the refrigerant pipes 1031 (forward pipe 1031a and return pipe 1031b) is attached to the lid plate 1048. The main body portion 1275a of this first cover member 1275 has a hole (not shown) through which the forward pipe 1031a of the refrigerant pipes 1031 connected to the refrigerant pipe connection portion 1074 and the return pipe 1031b of the refrigerant pipes 1031 connected to the refrigerant pipe connection portion 1073 pass. In addition, the main body portion 1275a of the first cover member 1275 has a connection hole (not shown) to which the upper end of the discharge hose 1230 is connected.

Furthermore, the first cover member 1275 includes a guide passage 1275b extending upward along the right side surface of the casing 1040 from the right side of the main body portion 1275a.

The discharge hose 1230 and the first cover member 1275 constitute a discharge member.

In addition, in the hot water storage unit 1001 with the above configuration, the heat insulating material 1014 (inner cover member) disposed in the casing 1040 covers the refrigerant pipe connection portion of the refrigerant circuit and guides the leaking flammable refrigerant to the outside of the casing 1040. For example, when the flammable refrigerant leaks rapidly into the casing 1040, since most of the flammable refrigerant immediately after leaking remains as liquid, the flammable refrigerant can be guided by the heat insulating material 1014 to flow from the connection port 1232 provided on the right side surface of the casing 1040 into the guide passage 1275b of the first cover member 1275 through the first cover member 1275 and the discharge hose 1230 and to be led to the main body portion 1275a, and can be rapidly discharged into the underside of the floor 1400 through the discharge hose 1230.

Thus, the first cover member 1275 has the same effect as the first cover member 275 in the cold/hot water supply unit 200 shown in FIG. 16 of the seventh embodiment.

Therefore, even in an environment where the hot water storage unit 1001 is installed in a room, it is possible to perform processing of discharging the flammable refrigerant into the underfloor space with the first cover member 1275 and the discharge hose 1230 so as to prevent the flammable refrigerant guided by the heat insulating material 1014 from leaking from inside the casing 1040 into the room. Thus, leakage of the refrigerant into the room can be prevented when the flammable refrigerant leaks, and it is possible to prevent the flammable refrigerant from staying in the room, the gas concentration from increasing, and the risk of ignition and the like from increasing.

As the above flammable refrigerant, using a single refrigerant made of R32 with a slightly flammable property or a mixed refrigerant containing R32 as a main component allows the impact on global warming to be reduced, the coefficient of performance (COP) to be improved, and energy consumption to be reduced because R32 has a low ozone depletion potential coefficient and global warming potential coefficient GWP.

In the first to eleventh embodiments, as the flammable refrigerant, a single refrigerant of R32 with a slightly flammable property or a mixed refrigerant containing R32 as a main component is used, but the flammable refrigerant is not limited thereto, and the present invention may be applied to a water heat exchanger accommodation unit using other flammable refrigerants.

In addition, in the first to eleventh embodiments, the cold/hot water supply unit 200 and the hot water storage unit 1001 are described as the water heat exchanger accommodation unit, but the water heat exchanger accommodation unit is not limited to this, and the present invention can be applied to a water heat exchanger through which a flammable refrigerant flows and to a device including a casing accommodating the water heat exchanger.

The specific embodiments of the present invention have been described, but the present invention is not limited to the first to eleventh embodiments, and various modifications can be made within the scope of the present invention. For example, an appropriate combination of contents described in the first to eleventh embodiments may be one embodiment of the present invention.

### REFERENCE SIGNS LIST

100: outdoor unit
101: compressor
102: four-way switching valve
103: outdoor heat exchanger
104: motor-operated expansion valve
105: accumulator
120: outdoor unit control device
200: cold/hot water supply unit
201, 1012: water heat exchanger
202: expansion tank
203, 1034: circulation pump
204: forward header
205: return header
215: pressure sensor
216: liquid receiver
220: cold/hot water supply unit control device
221: board cover member
230, 1230: discharge hose
231, 1040: casing
232, 260a, 241, 276, 1232, 1233: connection port
234, 235, 1073, 1074: refrigerant pipe connection portion
250: mounting table
251, 252, 260: liquid receiving member
270, 275, 1270, 1275: first cover member
280: second cover member
280a: main body portion
280b: guide portion
290: back surface heat insulating member
295: front surface heat insulating member
301 to 304: first to fourth water circulation pipe
400: floor
400a: hole
1001: hot water storage unit
1002: heat pump unit
1011: hot water storage tank
1012: water heat exchanger
1014: heat insulating material
1021: compressor
1022: expansion means
1023: air heat exchanger
1031: refrigerant pipe
1031a: forward pipe
1031b: return pipe
E: water supply source
L1, L2: refrigerant pipe
P1 to P4: first to fourth floor cooling/heating panel
T: hot water supply terminal
V1 to V4: first to fourth thermal valve

## Claims

1. A water heat exchanger accommodation unit comprising:
a water heat exchanger (201, 1012) through which a flammable refrigerant flows;
a casing (231, 1040) accommodating the water heat exchanger (201, 1012); and
an inner cover member (280, 1014) disposed in the casing (231, 1040) and configured to cover at least a refrigerant pipe connection portion of a refrigerant circuit and to guide a leaking flammable refrigerant to an outside of the casing (231, 1040),
**characterized in that**
the inner cover member (280) includes a guide portion (280b) engaged with a connection port (241) provided in the casing (231) and configured to guide the leaking flammable refrigerant to the connection port (241).

2. The water heat exchanger accommodation unit according to claim 1, wherein the inner cover member (280, 1014) covers the water heat exchanger (201, 1012).

3. The water heat exchanger accommodation unit according to claim 1, wherein the inner cover member (280, 1014) covers the whole refrigerant circuit in the casing (231, 1040).

4. The water heat exchanger accommodation unit according to any one of claims 1 to 3, wherein the inner cover member (280, 1014) is made of a heat insulating material.

5. The water heat exchanger accommodation unit according to any one of claims 1 to 4, further comprising:
a control board (220) disposed in the casing (231); and
a board cover member (221) configured to cover the control board (220).

## Patentansprüche

1. Aufnahmeeinheit für Wasserwärmetauscher, umfassend:
einen Wasserwärmetauscher (201, 1012), durch den ein entflammbares Kältemittel strömt;
ein Gehäuse (231, 1040), das den Wasserwärmetauscher (201, 1012) aufnimmt; und
ein inneres Abdeckelement (280, 1014), das im Gehäuse (231, 1040) angeordnet und konfiguriert ist, um mindestens einen Kältemittelleitung-Verbindungsabschnitt eines Kältemittelkreislaufs abzudecken und ein austretendes entflammbares Kältemittel zu einer Außenseite des Gehäuses (231, 1040) zu leiten,
**dadurch gekennzeichnet, dass**
das innere Abdeckelement (280) einen Führungsabschnitt (280b) einschließt, der sich im Eingriff mit einer in dem Gehäuse (231) vorgesehenen Verbindungsöffnung (241) befindet, und konfiguriert ist, um das austretende entflammbare Kältemittel zu der Verbindungsöffnung (241) zu leiten.

2. Aufnahmeeinheit für Wasserwärmetauscher nach Anspruch 1, wobei das innere Abdeckelement (280, 1014) den Wasserwärmetauscher (201, 1012) abdeckt.

3. Aufnahmeeinheit für Wasserwärmetauscher nach Anspruch 1, wobei das innere Abdeckelement (280, 1014) den gesamten Kältemittelkreislauf in dem Gehäuse (231, 1040) abdeckt.

4. Aufnahmeeinheit für Wasserwärmetauscher nach einem der Ansprüche 1 bis 3, wobei das innere Abdeckelement (280, 1014) aus einem wärmeisolierenden Material hergestellt ist.

5. Aufnahmeeinheit für Wasserwärmetauscher nach einem der Ansprüche 1 bis 4, weiter umfassend:
eine Steuerplatine (220), die in dem Gehäuse (231) angeordnet ist; und
ein Platinenabdeckelement (221), das konfiguriert ist, um die Steuerplatine (220) abzudecken.

## Revendications

1. Unité de logement d'échangeur de chaleur à eau comprenant :
un échangeur de chaleur à eau (201, 1012) au travers duquel un réfrigérant inflammable s'écoule ;
un boîtier (231, 1040) logeant l'échangeur de chaleur à eau (201, 1012) ; et
un élément de couverture intérieur (280, 1014) disposé dans le boîtier (231, 1040) et configuré pour couvrir au moins une portion de liaison de tube de réfrigérant d'un circuit de réfrigérant et pour guider un réfrigérant inflammable qui fuit vers un extérieur du boîtier (231, 1040),
**caractérisée en ce que**
l'élément de couverture intérieur (280) inclut une portion de guidage (280b) mise en prise avec un orifice de liaison (241) prévu dans le boîtier (231) et configurée pour guider le réfrigérant inflammable qui fuit vers l'orifice de liaison (241).

2. Unité de logement d'échangeur de chaleur à eau selon la revendication 1, dans laquelle l'élément de couverture intérieur (280, 1014) couvre l'échangeur de chaleur à eau (201, 1012).

3. Unité de logement d'échangeur de chaleur à eau selon la revendication 1, dans laquelle l'élément de couverture intérieur (280, 1014) couvre le circuit de réfrigérant entier dans le boîtier (231, 1040).

4. Unité de logement d'échangeur de chaleur à eau selon l'une quelconque des revendications 1 à 3, dans laquelle l'élément de couverture intérieur (280, 1014) est réalisé en un matériau thermoisolant.

5. Unité de logement d'échangeur de chaleur à eau selon l'une quelconque des revendications 1 à 4, comprenant en outre :
une plaque de commande (220) disposée dans le boîtier (231) ; et
un élément de couverture de plaque (221) configuré pour couvrir la plaque de commande (220).
